# EUROPEAN PATENT SPECIFICATION

(11) **EP 3 335 411 B1**
(45) Date of publication and mention of the grant of the patent: **14.10.2020**
(21) Application number: 16879179.6
(22) Date of filing: 15.11.2016
(51) Int. Cl.: G06F 3/0482, G06F 3/0486, G06F 3/0488

(54) **ELECTRONIC DEVICE AND METHOD OF MANAGING APPLICATION PROGRAMS THEREOF**
ELEKTRONISCHE VORRICHTUNG UND VERFAHREN ZUR VERWALTUNG VON ANWENDUNGSPROGRAMMEN DAFÜR
DISPOSITIF ÉLECTRONIQUE, ET PROCÉDÉ DE GESTION DE PROGRAMMES D'APPLICATION ASSOCIÉS

(30) Priority: 24.12.2015 KR 20150186792
(43) Date of publication of application: 20.06.2018
(73) Proprietor: Samsung Electronics Co., Ltd., Suwon-si, Gyeonggi-do 16677 (KR)
(72) Inventor: LEE, Jaeho, Daegu 42006 (KR); KONG, Kyuchul, Gumi-si Gyeongsangbuk-do 39448 (KR); KWON, Banghyun, Gumi-si Gyeongsangbuk-do 39171 (KR); JEONG, Juhyun, Gumi-si Gyeongsangbuk-do 39388 (KR); JEONG, Hyesoon, Chilgok-gun Gyeongsangbuk-do 39843 (KR); HWANG, Daesung, Gumi-si Gyeongsangbuk-do 39442 (KR); HAN, Jonghyun, Seoul 06038 (KR); CHOI, Hyunsuk, Daegu 41429 (KR)
(74) Representative: HGF
(86) International application number: PCT/KR2016/013112
(87) International publication number: WO 2017/111312

(56) References cited:
- EP-A1- 2 829 965
- WO-A1-2012/028773
- US-A1- 2010 231 533
- US-A1- 2011 061 056
- US-A1- 2013 021 266
- US-A1- 2013 198 690
- US-A1- 2014 089 857
- US-A1- 2015 029 113
- US-A1- 2015 156 061
- US-A1- 2015 193 129
- US-A1- 2015 205 488
- US-A1- 2015 317 049

## Description

### Technical Field

The present disclosure relates to a method of registering links for executing various menus or functions included in application programs. The present disclosure also relates to an electronic device for collecting the registered links and allowing the user to select one of the links and a method of managing application programs of the electronic device.

### Background Art

In general, application programs are designed in such a way as to provide uniform resource identifier (URI) capable of executing the internal functions and to call the URIs.

Deep linking refers to a technology that allows tasks between application programs to be seamlessly switched. Deep linking makes it possible to search for internal information of application programs as well as content of web pages. When part of the search result, related to internal information of an application program, is selected, a corresponding menu of the application program, instead of a separate web, is immediately called. US2015/0193129 A1 discloses an electronic device that includes a touch-sensitive display, and a processor configured to display a screen of a first application program, on the display, wherein the processor is configured to display a first portion that is able to receive a user input and is movable, on the display, receive a user input applied on or near the first portion displayed on the display, and display a second portion that is larger than the first portion, on the display, in response to the user input, and wherein the second portion includes at least one item for enabling a user to select at least one function of the first application program.

### Disclosure of Invention

### Technical Problem

Existing deep linking has not had a standard, and thus is disadvantageous because the deep links need to be implemented to comply with the purposes of application programs, respectively. Existing deep linking is also disadvantageous in that it does not collect information regarding deep links declared by a number of application programs and does not provide a shortcut that serves as a unit of detailed internal function of an application program, not a unit of application program.

### Solution to Problem

Aspects of the present disclosure are to address at least the above-mentioned problems and/or disadvantages and to provide at least the advantages described below. Accordingly, an aspect of the present disclosure is to provide a method of managing the application programs and an electronic device adapted to the method. The method is performed by registering links for the execution of various menus or functions included in application programs, collecting the registered links, allowing the user to select one of the links, and executing the selected link.

In accordance with an aspect of the present disclosure, an electronic device includes a touchscreen display comprising a first portion and a second portion. The electronic device further includes at least one processor electrically connected to the touchscreen display and a memory electrically connected to the at least one processor.

The memory is configured to store an application programs including a function and a plurality of sub-functions, and wherein the memory is further configured to store instructions that, when executed by the at least one processor, cause the at least one processor to receive, from the touchscreen display, a first input, display, on the touchscreen display, a user interface (UI) in response to the first input, the UI including a first area displayed on the first portion and a second area displayed on the second portion the second portion comprising at least one indication corresponding to a sub-function of the application program, wherein the indication comprises a first icon representing the application program and a second icon representing the corresponding sub-function, receive, from the touchscreen display, a second input selecting an indication from among the at least one indication, execute he sub-function corresponding to the selected indication in response to the second input without separately executing the application program, and display, on the touchscreen display a UI corresponding to the executed sub-function.

In accordance with another aspect of the present disclosure, a method of managing application programs is provided. The method includes storing, in a memory, an application program comprising a function and a plurality of sub-functions, receiving, by at least one processor from a touchscreen display, a first input, displaying, on the touchscreen display, a user interface (UI) in response to the first input, the UI comprising a first area displayed on a first portion of the touchscreen display, and a second area displayed on a second portion of the touchscreen display, the second area comprising at least on indication corresponding to a sub-function of one or the plurality of application program, wherein the indication comprises a first icon representing the application program and a second icon representing the corresponding sub-function, receiving, by the at least one processor from the touchscreen display, a second input selecting an indication from among the at least one indication, executing the sub-function corresponding to the selected indication in response to the second input without separately executing the application program, and displaying, on the touchscreen display, a UI corresponding to the executed sub-function.

Other aspects, advantages, and salient features of the disclosure will become apparent to those skilled in the art from the following detailed description, which, taken in conjunction with the annexed drawings, discloses various embodiments of the present disclosure. The invention will be carried out according to the attached independent claims.

### Advantageous Effects of Invention

According to various embodiments of the present disclosure, unnecessary power consumption can be decreased by skipping executing the application program and executing various steps from a detailed menu when executing a detailed function in an application program.

According to various embodiments, a task through the preferred application program can be executed immediately and a UI (user interface) for accessing the application program from any screen is provided, resulting in convenience for the user.

### Brief Description of Drawings

The above and other aspects, features, and advantages of certain embodiments of the present disclosure will be more apparent from the following description taken in conjunction with the accompanying drawings, in which:
FIG. 1 is a network environment including an electronic device according to an embodiment of the present disclosure;
FIG. 2 is a block diagram of an electronic device according to an embodiment of the present disclosure;
FIG. 3 is a block diagram of a program module according to an embodiment of the present disclosure;
FIGS. 4A, 4B, and 4C are diagrams that describe a method of managing application programs according to various embodiments of the present disclosure;
FIG. 5 is a flowchart that describes a method of managing application programs in an electronic device according to an embodiment of the present disclosure;
FIG. 6 is a block diagram showing an electronic device for managing application programs according to an embodiment of the present disclosure;
FIG. 7 is a block diagram showing an electronic device for managing application programs according to an embodiment of the present disclosure;
FIG. 8 is a block diagram that described above a method of managing application programs according to an embodiment of the present disclosure;
FIG. 9 is a block diagram showing a program module included in an electronic device according to an embodiment of the present disclosure;
FIG. 10 shows diagrams that describe a method of setting shortcut menus in an electronic device according to an embodiment of the present disclosure;
FIGS. 11A and 11B show diagrams that describe a method of managing a search application program in an electronic device according to various embodiments of the present disclosure;
FIG. 12 is a diagram that describes a method of managing application programs according to an embodiment of the present disclosure;
FIGS. 13A and 13B show diagrams that describe a method of managing application programs according to various embodiments of the present disclosure;
FIGS. 14A and 14B show diagrams that describe a method of managing application programs according to various embodiments of the present disclosure;
FIG. 15 shows diagrams that describe a method of managing application programs according to an embodiment of the present disclosure; and
FIGS. 16A and 16B show diagrams that describe the structure of a display of an electronic device according to various embodiments of the present disclosure.

Throughout the drawings, it should be noted that like reference numbers are used to depict the same or similar elements, features, and structures.

### Mode for the Invention

The following description with reference to the accompanying drawings is provided to assist in a comprehensive understanding of various embodiments of the present disclosure as defined by the claims. disclosure are only used to describe specific various embodiments of the present invention.

An electronic device according to the present disclosure may be a device including a communication function. For example, the device corresponds to a combination of at least one of a smartphone, a tablet personal computer (PC), a mobile phone, a video phone, an e-book reader, a desktop PC, a laptop PC, a netbook computer, a personal digital assistant (PDA), a portable multimedia player (PMP), a digital audio player, a mobile medical device, an electronic bracelet, an electronic necklace, an electronic accessory, a camera, a wearable device, an electronic clock, a wrist watch, home appliances (for example, an air-conditioner, vacuum, an oven, a microwave, a washing machine, an air cleaner, and the like), an artificial intelligence robot, a television (TV), a digital versatile disc (DVD) player, an audio device, various medical devices (for example, magnetic resonance angiography (MRA), magnetic resonance imaging (MRI), computed tomography (CT), a scanning machine, a ultrasonic wave device, and the like), a navigation device, a global positioning system (GPS) receiver, an event data recorder (EDR), a flight data recorder (FDR), a set-top box, a TV box (for example, Samsung HomeSync™, Apple TV™, or Google TV™), an electronic dictionary, vehicle infotainment device, an electronic equipment for a ship (for example, navigation equipment for a ship, gyrocompass, and the like), avionics, a security device, electronic clothes, an electronic key, a camcorder, game consoles, a head-mounted display (HMD), a flat panel display device, an electronic frame, an electronic album, furniture or a portion of a building/structure that includes a communication function, an electronic board, an electronic signature receiving device, a projector, and the like. It is obvious to those skilled in the art that the electronic device according to the present disclosure is not limited to the aforementioned devices.

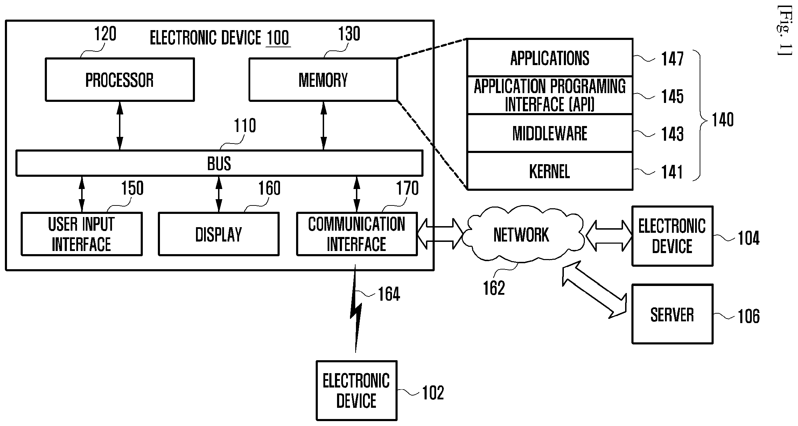

FIG. 1 is a network environment including an electronic device according to an embodiment of the present disclosure.

Referring to FIG. 1, an electronic device 100 may include a bus 110, a processor 120, a memory 130, a user input interface module 150, a display module 160, a communication interface module 170, and other similar and/or suitable components.

The bus 110 may be a circuit which interconnects the above-described elements and delivers a communication (e.g., a control message) between the above-described elements.

The processor 120 may receive commands from the above-described other elements (e.g., the memory 130, the user input interface module 150, the display module 160, the communication interface module 170, and the like) through the bus 110, may interpret the received commands, and may execute calculation or data processing according to the interpreted commands.

The memory 130 may store commands or data received from the processor 120 or other elements (e.g., the user input interface module 150, the display module 160, the communication interface module 170, and the like) or generated by the processor 120 or the other elements. The memory 130 may include programming modules, such as a kernel 141, middleware 143, an application programming interface (API) 145, one or more applications 147, and the like. Each of the above-described programming modules may be implemented in software, firmware, hardware, or a combination of two or more thereof.

The kernel 141 may control or manage system resources (e.g., the bus 110, the processor 120, the memory 130, and the like) used to execute operations or functions implemented by other programming modules (e.g., the middleware 143, the API 145, and the application 147). In addition, the kernel 141 may provide an interface capable of accessing and controlling or managing the individual elements of the electronic device 100 by using the middleware 143, the API 145, or the application 147.

The middleware 143 may serve to go between the API 145 or the application 147 and the kernel 141 in such a manner that the API 145 or the application 147 communicates with the kernel 141 and exchanges data therewith. In addition, in relation to work requests received from the one or more applications 147 and/or the middleware 143, for example, may perform load balancing of the work requests by using a method of assigning a priority, in which system resources (e.g., the bus 110, the processor 120, the memory 130, and the like) of the electronic device 100 can be used, to at least one of the one or more applications 147.

The API 145 is an interface through which the one or more applications 147 are capable of controlling a function provided by the kernel 141 or the middleware 143, and may include, for example, at least one interface or function for file control, window control, image processing, character control, and the like.

The user input interface module 150, for example, may receive a command or data as input from a user, and may deliver the received command or data to the processor 120 or the memory 130 through the bus 110. The display module 160 may display a video, an image, data, and the like, to the user.

The communication interface module 170 may connect communication between electronic devices 102 and 104, and the electronic device 100. The communication interface module 170 may support a short-range communication protocol 164 (e.g., wireless fidelity (Wi-Fi), Bluetooth (BT), and near field communication (NFC)), or a network communication 162 (e.g., the Internet, a local area network (LAN), a wide area network (WAN), a telecommunication network, a cellular network, a satellite network, a plain old telephone service (POTS), and the like). Each of the electronic devices 102 and 104 may be a device which is identical (e.g., of an identical type) to or different (e.g., of a different type) from the electronic device 100. Further, the communication interface module 170 may connect communication between a server 106 and the electronic device 100 via the network 162.

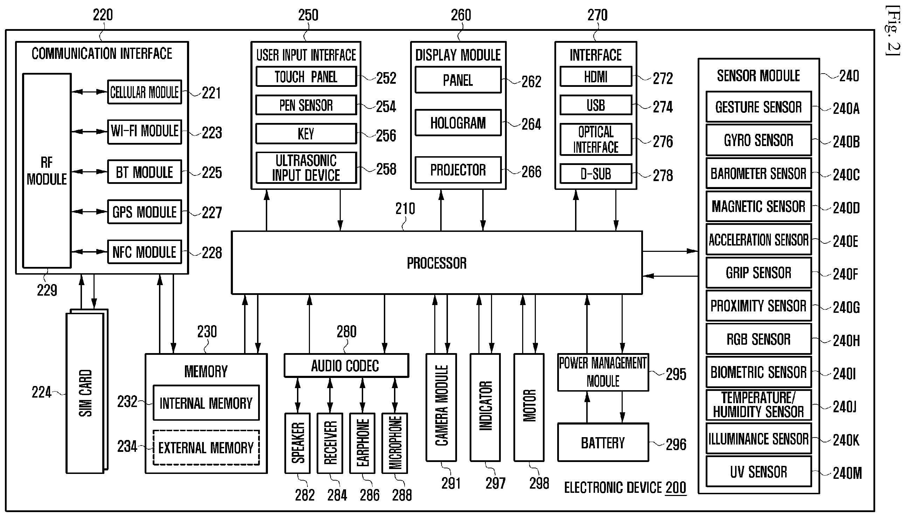

FIG. 2 is a block diagram of an electronic device according to an embodiment of the present disclosure.

Referring to FIG. 2, an electronic device 200 may be, for example, the electronic device 100 illustrated in FIG. 1.

Referring to FIG. 2, the electronic device 200 may include one or more processors 210, a subscriber identification module (SIM) card 224, a memory 230, a communication interface module 220, a sensor module 240, a user input interface module 250, a display module 260, an interface 270, an audio coder/decoder (codec) 280, a camera module 291, a power management module 295, a battery 296, an indicator 297, a motor 298 and any other similar and/or suitable components.

The processor 210 (e.g., the processor 120) may include one or more application processors (APs), or one or more communication processors (CPs). The processor 210 may be, for example, the processor 120 illustrated in FIG. 1. The AP and the CP may be included in the processor 210 in FIG. 2, but may be included in different integrated circuit (IC) packages, respectively. According to an embodiment of the present disclosure, the AP and the CP may be included in one IC package.

The AP may execute an operating system (OS) or an application program, and thereby may control multiple hardware or software elements connected to the AP and may perform processing of and arithmetic operations on various data including multimedia data. The AP may be implemented by, for example, a system on chip (SoC). According to an embodiment of the present disclosure, the processor 210 may further include a graphical processing unit (GPU).

The CP may manage a data line and may convert a communication protocol in the case of communication between the electronic device 200 (e.g., the electronic device 100) and different electronic devices connected to the electronic device 200 through a communication network. The CP may be implemented by, for example, an SoC. According to an embodiment of the present disclosure, the CP may perform at least some of multimedia control functions. The CP, for example, may distinguish and authenticate a terminal in a communication network by using a subscriber identification module (SIM) (e.g., the SIM card 224). In addition, the CP may provide the user with services, such as a voice telephony call, a video telephony call, a text message, packet data, and the like.

Further, the CP may control the transmission and reception of data by the communication interface module 220. In FIG. 2, the elements, such as the CP, the power management module 295, the memory 230, and the like are illustrated as elements separate from the processor 210. However, according to an embodiment of the present disclosure, the processor 210 may include at least some (e.g., the CP) of the above-described elements.

According to an embodiment of the present disclosure, the AP or the CP may load, to a volatile memory, a command or data received from at least one of a non-volatile memory and other elements connected to each of the AP and the CP, and may process the loaded command or data. In addition, the AP or the CP may store, in a non-volatile memory, data received from or generated by at least one of the other elements.

The SIM card 224 may be a card implementing a SIM, and may be inserted into a slot formed in a particular portion of the electronic device 200. The SIM card 224 may include unique identification information (e.g., integrated circuit card identifier (ICCID)) or subscriber information (e.g., international mobile subscriber identity (IMSI)).

The memory 230 may include an internal memory 232 and an external memory 234. The memory 230 may be, for example, the memory 130 illustrated in FIG. 1. The internal memory 232 may include, for example, at least one of a volatile memory (e.g., a dynamic random access memory (DRAM), a static RAM (SRAM), a synchronous dynamic RAM (SDRAM), and the like), and a non-volatile memory (e.g., a onetime programmable read only memory (OTPROM), a programmable ROM (PROM), an erasable and programmable ROM (EPROM), an electrically erasable and programmable ROM (EEPROM), a mask ROM, a flash ROM, a not AND (NAND) flash memory, a not OR (NOR) flash memory, and the like). According to an embodiment of the present disclosure, the internal memory 232 may be in the form of a solid state drive (SSD). The external memory 234 may further include a flash drive, for example, a compact flash (CF), a secure digital (SD), a micro-SD, a mini-SD, an extreme digital (xD), a memory stick, and the like.

The communication interface module 220 may include a radio frequency (RF) module 229 and a plurality of modules for particular wireless communication technologies. The communication interface module 220 may be, for example, the communication module 160 illustrated in FIG. 1. Additionally or alternatively, the wireless communication module 231 may include a network interface (e.g., a LAN card), a modulator/demodulator (modem), and the like for connecting the electronic device 200 to a network (e.g., the Internet, a LAN, a WAN, a telecommunication network, a cellular network, a satellite network, a POTS, and the like) (not illustrated).

The communication interface module 220 (e.g., the communication interface module 170) may perform data communication with other electronic devices (e.g., the electronic devices 102 and 104, and the server 106) through a communication network using the RF module 229 and the plurality of modules for particular wireless communication technologies. According to an embodiment of the present disclosure, the plurality of modules for particular wireless communication technologies may include a cellular module 221, a Wi-Fi module 223, a BT module 225, a GPS module 227, and an NFC module 228, and a RF module 229.

The RF module 229 may be used for transmission and reception of data, for example, transmission and reception of RF signals or electronic signals. Although not illustrated, the RF unit 229 may include, for example, a transceiver, a power amplifier module (PAM), a frequency filter, a low noise amplifier (LNA), and the like. In addition, the RF module 229 may further include a component for transmitting and receiving electromagnetic waves in a free space for wireless communication, for example, a conductor, a conductive wire, and the like.

The sensor module 240 may include, for example, at least one of a gesture sensor 240A, a gyro sensor 240B, a barometer sensor 240C, a magnetic sensor 240D, an acceleration sensor 240E, a grip sensor 240F, a proximity sensor 240G, a red, green and blue (RGB) sensor 240H, a biometric sensor 240I, a temperature/humidity sensor 240J, an illuminance sensor 240K, and an ultra violet (UV) sensor 240M. The sensor module 240 may measure a physical quantity or may detect an operating state of the electronic device 200, and may convert the measured or detected information to an electrical signal. Additionally or alternatively, the sensor module 240 may include, for example, an Electronic nose (E-nose) sensor (not illustrated), an electromyography (EMG) sensor (not illustrated), an electroencephalogram (EEG) sensor (not illustrated), an electrocardiogram (ECG) sensor (not illustrated), a fingerprint sensor (not illustrated), and the like. Additionally or alternatively, the sensor module 240 may include, for example, an E-nose sensor (not illustrated), an EMG sensor (not illustrated), an EEG sensor (not illustrated), an ECG sensor (not illustrated), a fingerprint sensor (not illustrated), and the like. The sensor module 240 may further include a control circuit (not illustrated) for controlling one or more sensors included therein.

The user input interface module 250 may include a touch panel 252, a pen sensor 254 (e.g., a digital pen sensor), keys 256, and an ultrasonic input device 258. The user input interface module 250 may be, for example, the user input interface module 150 illustrated in FIG. 1. The touch panel 252 may recognize a touch input in at least one of, for example, a capacitive scheme, a resistive scheme, an infrared scheme, and an acoustic wave scheme. In addition, the touch panel 252 may further include a controller (not illustrated). In the capacitive type, the touch panel 252 is capable of recognizing proximity as well as a direct touch. The touch panel 252 may further include a tactile layer (not illustrated). In this event, the touch panel 252 may provide a tactile response to the user.

The pen sensor 254 (e.g., a digital pen sensor), for example, may be implemented by using a method identical or similar to a method of receiving a touch input from the user, or by using a separate sheet for recognition. For example, a key pad or a touch key may be used as the keys 256. The ultrasonic input device 258 enables the terminal to detect a sound wave by using a microphone (e.g., a microphone 288) of the terminal through a pen generating an ultrasonic signal, and to identify data. The ultrasonic input device 258 is capable of wireless recognition. According to an embodiment of the present disclosure, the electronic device 200 may receive a user input from an external device (e.g., a network, a computer, or a server), which is connected to the communication interface module 220, through the communication interface module 220.

The display module 260 may include a panel 262, a hologram 264, or a projector 266. The display module 260 may be, for example, the display module 160 illustrated in FIG. 1. The panel 262 may be, for example, a liquid crystal display (LCD) and an active matrix organic light emitting diode (AM-OLED) display, and the like. The panel 262 may be implemented so as to be, for example, flexible, transparent, or wearable. The panel 262 may include the touch panel 252. The hologram 264 may display a three-dimensional image in the air by using interference of light. According to an embodiment of the present disclosure, the display module 260 may further include a control circuit for controlling the panel 262 or the hologram 264.

The interface 270 may include, for example, a high-definition multimedia interface (HDMI) 272, a universal serial bus (USB) 274, an optical interface 276, and a d-subminiature (D-sub) 278. Additionally or alternatively, the interface 270 may include, for example, SD/multi-media card (MMC) (not illustrated) or infrared data association (IrDA) (not illustrated).

The audio codec 280 may bi-directionally convert between a voice and an electrical signal. The audio codec 280 may convert voice information, which is input to or output from the audio codec 280 through, for example, a speaker 282, a receiver 284, an earphone 286, the microphone 288, and the like.

The camera module 291 may capture an image and a moving image. According to an embodiment of the present disclosure, the camera module 291 may include one or more image sensors (e.g., a front lens or a back lens) (not illustrated), an image signal processor (ISP) (not illustrated), and a flash light emitting diode (LED) (not illustrated).

The power management module 295 may manage power of the electronic device 200. Although not illustrated, the power management module 295 may include, for example, a power management integrated circuit (PMIC), a charger IC, or a battery fuel gauge.

The PMIC may be mounted to, for example, an IC or an SoC semiconductor. Charging methods may be classified into a wired charging method and a wireless charging method. The charger IC may charge a battery, and may prevent an overvoltage or an overcurrent from a charger to the battery. According to an embodiment of the present disclosure, the charger IC may include a charger IC for at least one of the wired charging method and the wireless charging method. Examples of the wireless charging method may include a magnetic resonance method, a magnetic induction method, an electromagnetic method, and the like. Additional circuits (e.g., a coil loop, a resonance circuit, a rectifier, and the like) for wireless charging may be added in order to perform the wireless charging.

The battery fuel gauge may measure, for example, a residual quantity of the battery 296, or a voltage, a current or a temperature during the charging. The battery 296 may supply power by generating electricity, and may be, for example, a rechargeable battery.

The indicator 297 may indicate particular states of the electronic device 200 or a part (e.g., the AP) of the electronic device 200, for example, a booting state, a message state, a charging state and the like. The motor 298 may convert an electrical signal into a mechanical vibration. The processor 210 may control the sensor module 240.

Although not illustrated, the electronic device 200 may include a processing unit (e.g., a GPU) for supporting a module TV. The processing unit for supporting a module TV may process media data according to standards, such as, for example, digital multimedia broadcasting (DMB), digital video broadcasting (DVB), media flow, and the like. Each of the above-described elements of the electronic device 200 according to an embodiment of the present disclosure may include one or more components, and the name of the relevant element may change depending on the type of electronic device. The electronic device 200 according to an embodiment of the present disclosure may include at least one of the above-described elements. Some of the above-described elements may be omitted from the electronic device 200, or electronic device 200 may further include additional elements. In addition, some of the elements of the electronic device 200 according to an embodiment of the present disclosure may be combined into one entity, which may perform functions identical to those of the relevant elements before the combination.

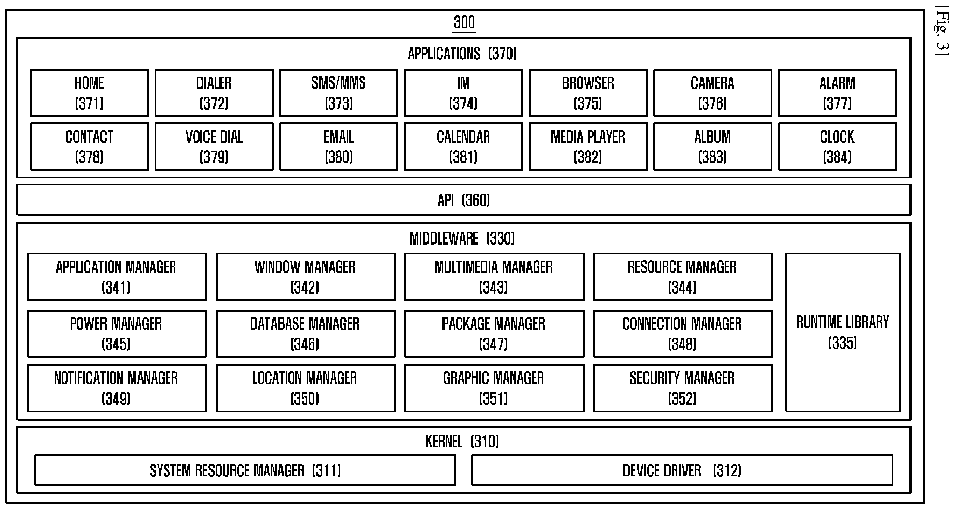

FIG. 3 is a block diagram of a programming module according to an embodiment of the present disclosure.

Referring to FIG. 3, a programming module 300 may be included (or stored) in the electronic device 100 (e.g., the memory 130) or may be included (or stored) in the electronic device 200 (e.g., the memory 230) illustrated in FIG. 1. At least a part of the programming module 300 may be implemented in software, firmware, hardware, or a combination of two or more thereof. The programming module 300 may be implemented in hardware (e.g., the electronic device 200), and may include an OS controlling resources related to an electronic device (e.g., the electronic device 200) and/or various applications (e.g., an application 370) executed in the OS. For example, the OS may be Android™, iOS™, Windows™, Symbian™, Tizen™, Bada™, and the like.

Referring to FIG. 3, the programming module 300 may include a kernel 310, a middleware 330, an API 360, and/or the application 370.

The kernel 310 (e.g., the kernel 141) may include a system resource manager 311 and/or a device driver 312. The system resource manager 311 may include, for example, a process manager (not illustrated), a memory manager (not illustrated), and a file system manager (not illustrated). The system resource manager 311 may perform the control, allocation, recovery, and the like of system resources. The device driver 312 may include, for example, a display driver (not illustrated), a camera driver (not illustrated), a BT driver (not illustrated), a shared memory driver (not illustrated), a USB driver (not illustrated), a keypad driver (not illustrated), a Wi-Fi driver (not illustrated), and/or an audio driver (not illustrated). In addition, according to an embodiment of the present disclosure, the device driver 312 may include an inter-process communication (IPC) driver (not illustrated).

The middleware 330 may include multiple modules previously implemented so as to provide a function used in common by the applications 370. In addition, the middleware 330 may provide a function to the applications 370 through the API 360 in order to enable the applications 370 to efficiently use limited system resources within the electronic device. For example, as illustrated in FIG. 3, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 may include, for example, a library module used by a complier, in order to add a new function by using a programming language during the execution of the application 370. According to an embodiment of the present disclosure, the runtime library 335 may perform functions which are related to input and output, the management of a memory, an arithmetic function, and the like.

The application manager 341 may manage, for example, a life cycle of at least one of the applications 370. The window manager 342 may manage graphical user interface (GUI) resources used on the screen. The multimedia manager 343 may detect a format used to reproduce various media files and may encode or decode a media file through a codec appropriate for the relevant format. The resource manager 344 may manage resources, such as a source code, a memory, a storage space, and the like of at least one of the applications 370.

The power manager 345 may operate together with a basic input/output system (BIOS), may manage a battery or power, and may provide power information and the like used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity, such as, for example, Wi-Fi and BT. The notification manager 349 may display or report, to the user, an event, such as an arrival message, an appointment, a proximity alarm, and the like in such a manner as not to disturb the user. The location manager 350 may manage location information of the electronic device. The graphic manager 351 may manage a graphic effect, which is to be provided to the user, and/or a UI related to the graphic effect. The security manager 352 may provide various security functions used for system security, user authentication, and the like. According to an embodiment of the present disclosure, when the electronic device (e.g., the electronic device 100) has a telephone function, the middleware 330 may further include a telephony manager (not illustrated) for managing a voice telephony call function and/or a video telephony call function of the electronic device.

The middleware 330 may generate and use a new middleware module through various functional combinations of the above-described internal element modules. The middleware 330 may provide modules specialized according to types of OSs in order to provide differentiated functions. In addition, the middleware 330 may dynamically delete some of the existing elements, or may add new elements. Accordingly, the middleware 330 may omit some of the elements described in the various embodiments of the present disclosure, may further include other elements, or may replace the some of the elements with elements, each of which performs a similar function and has a different name.

The API 360 (e.g., the API 145) is a set of API programming functions, and may be provided with a different configuration according to an OS. In the case of Android or iOS, for example, one API set may be provided to each platform. In the case of Tizen ™ , for example, two or more API sets may be provided to each platform.

The applications 370 (e.g., the applications 147) may include, for example, a preloaded application and/or a third party application. The applications 370 may include, for example, a home application 371, a dialer application 372, a short message service (SMS)/multimedia message service (MMS) application 373, an instant message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, and any other suitable and/or similar application.

At least a part of the programming module 300 may be implemented by instructions stored in a non-transitory computer-readable storage medium. When the instructions are executed by one or more processors (e.g., the one or more processors 210), the one or more processors may perform functions corresponding to the instructions. The non-transitory computer-readable storage medium may be, for example, the memory 230. At least a part of the programming module 300 may be implemented (e.g., executed) by, for example, the one or more processors 210. At least a part of the programming module 300 may include, for example, a module, a program, a routine, a set of instructions, and/or a process for performing one or more functions.

Names of the elements of the programming module (e.g., the programming module 300) according to an embodiment of the present disclosure may change depending on the type of OS. The programming module according to an embodiment of the present disclosure may include one or more of the above-described elements. Alternatively, some of the above-described elements may be omitted from the programming module. Alternatively, the programming module may further include additional elements. The operations performed by the programming module or other elements according to an embodiment of the present disclosure may be processed in a sequential method, a parallel method, a repetitive method, or a heuristic method. In addition, some of the operations may be omitted, or other operations may be added to the operations.

In various embodiments described in the present disclosure, an electronic device for managing application programs is implemented to include: a housing with a first surface facing a first direction and a second surface facing a second direction that differs from the first direction, wherein the second surface extends from one edge of the first surface and has a width smaller than that of the first surface; a touch panel; a touchscreen display with a first portion revealed through the first surface and a second portion revealed through the second surface; a processor, located in the housing and electrically connected to the touchscreen display; and a memory electrically connected to the processor. The memory stores an application program containing default functionality and a number of sub-functions. The memory stores instructions enabling the processor to: receive a first input via a first portion and/or a second portion of the touchscreen display; display a UI on the touchscreen display in response to the first input, wherein the UI is comprised of a first area displayed on the first portion and a second area displayed on the second portion, and the first area is comprised of a first indication representing the application program and a number of second indications that represent the sub-functions of the application program respectively; receive a second input for selecting one of the second indications via at least part of the first area; display, on the second area of the user interface, a third indication representing a sub-function selected in response to the selected second indication; end the UI and display the third indication on the second portion of the touchscreen display; receive a third input for selecting the third indication via the second portion of the touchscreen display; and activate the selected sub-function in response to the third input, without activating the default functionality.

In the embodiment according to various embodiments described in the present disclosure, the memory stores an instruction that enables the processor to display the first and second areas sequentially or simultaneously.

In the embodiment according to various embodiments described in the present disclosure, each of the first, second, and third indications includes at least one of the following: a text, an icon, an image, a photograph, a thumbnail or a symbol.

In the embodiment according to various embodiments described in the present disclosure, the application program includes at least one of the following: a camera application program, a photograph gallery application program, a photograph application program, a contacts application program, a video conference or chatting application program, a memo application program, a message application program, a web browser application program, and a calendar application program.

In various embodiments described in the present disclosure, an electronic device for managing application programs is implemented to include: a housing with a first surface facing a first direction and a second surface facing a second direction that differs from the first direction, wherein the second surface extends from one edge of the first surface and has a width smaller than that of the first surface; a touch panel; a touchscreen display with a first portion revealed through the first surface and a second portion revealed through the second surface; a processor, located in the housing and electrically connected to the touchscreen display; and a memory electrically connected to the processor. The memory stores an application program configured to receive a number of content items from the outside of the electronic device or to provide a number of stored content items. The memory stores instructions enabling the processor to: receive a first input via a first portion and/or a second portion of the touchscreen display; display a UI on the touchscreen display in response to the first input, wherein the UI is comprised of a first area displayed on the first portion and a second area displayed on the second portion, and the first area is comprised of a first indication representing the application program and a number of second indications that represent the content items respectively; receive a second input for selecting one of the second indications via at least part of the first area; display, on the second area of the user interface, a third indication representing a content item selected in response to the selected second indication; end the UI and display the third indication on the second portion of the touchscreen display; receive a third input for selecting the third indication via the second portion of the touchscreen display; and display the selected content item on the first portion of the touchscreen display in response to the third input.

In the electronic device according to various embodiments described in the present disclosure, the content includes media content corresponding to at least one of the following: a video, music, and an image.

In the electronic device according to various embodiments described in the present disclosure, the content includes: text content corresponding to at least one of the following: a document, a web browser access address, a search result, a memo, and a message.

In the electronic device according to various embodiments described in the present disclosure, the memory stores instructions that enable the processor to: search for data included in the electronic device via a search application program; output a search result; create a shortcut indication linked to the output search result; and register the created shortcut indication as the second indication.

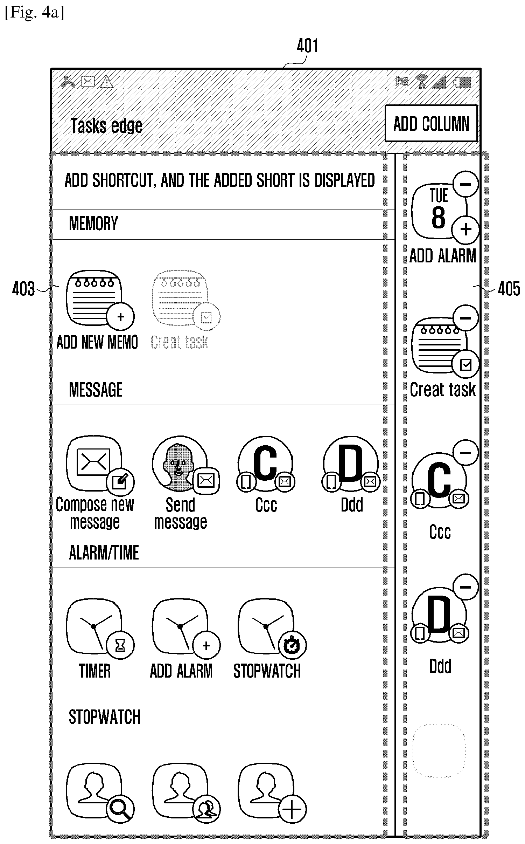

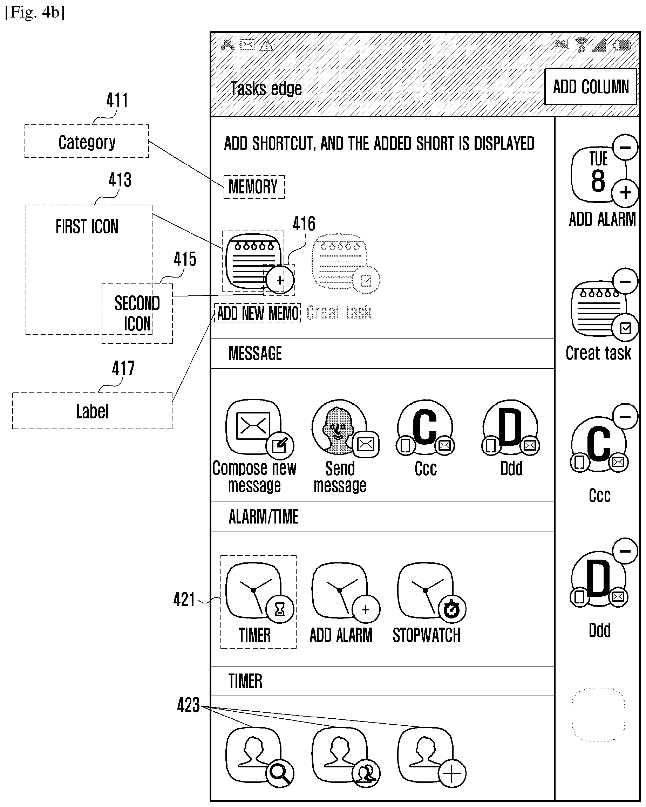

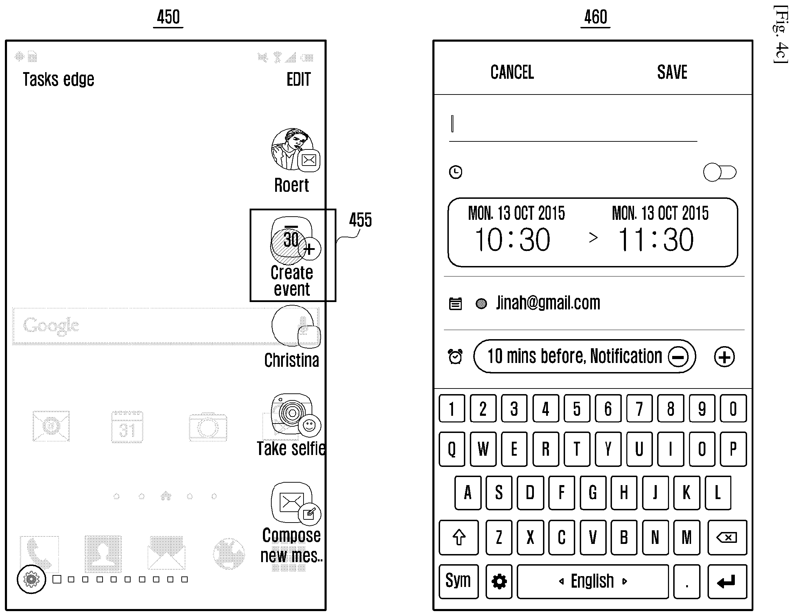

FIGS. 4A, 4B, and 4C are diagrams that describe a method of managing application programs according to various embodiments of the present disclosure.

Referring to FIG. 4A, an electronic device according to various embodiments described in the present disclosure is capable of providing a UI for managing application programs. The interface includes a top end 401 at the upper part. The top end 401 is capable of displaying the name of the UI or a portion for determining a condition as to whether it edits the user interface.

The interface includes a lower part with an area 403 where application programs running on the electronic device are arranged at one side. In an embodiment, the area 403 of the lower part displays indications for executing a default function of application programs therein, and shortcut indications for executing corresponding detailed functions of the application programs therein. The shortcut indications are used to execute a corresponding detailed function of the application program, without requiring a number of operations, such as executing a corresponding application, searching for a detailed menu, executing the menu, etc. Although the embodiment shown in FIG. 4A is implemented in such a way that the area 403 is displayed at the left side of the lower part of the interface, it should be understood that the area 403 may be arranged at the right side of the lower part or at the horizontal direction of the lower part according to a user's setting.

The interface includes another area 405 at the other side of the lower part, where a number of indications related to application programs running on the electronic device are displayed in one or more columns or rows. Area 405 may include one of the indications included in the area 403.

In an embodiment, when an input is applied to the portion for determining a condition as to whether to edit the user interface, included in the top end 401, the indications included in the area 403 or 405 of the lower part may be edited. Indications displayed in the area 403 may be moved into the area 405. Indications in the area 405 may be edited, e.g., deleted, re-arranged in a different order, etc.

FIG. 4B is a diagram showing indications included in a UI according to an embodiment of the present disclosure.

The UI according to an embodiment is capable of including indications related to tasks of one or more application programs running on the electronic device. The UI displays a number of application programs using category information included in the individual application programs. The user interface is capable of including indications implemented with one or more icons corresponding to application programs.

For example, the UI may include an 'add new memo' indication for executing a function of adding a new memo. Since the 'add new memo' indication is used to add a new memo it may be included in a 'memo' category. Therefore, the category display area 411 may show 'memo'. The 'add new memo' indication included in the 'memo' category may include a first icon 413 representing a memo application program. The user can recognize that the 'add new memo' indication is an indication for executing a function related to a memo application program, via the first icon 413.

The first icon 413 may be displayed, at the bottom right, along with an added image related to a detailed function of an application program to be executed via the indication. That is, the first icon 413 may be displayed, at the bottom right, along with a second icon 415 representing at least one of the detailed functions of the memo application program. In the embodiment, since the 'add new memo' indication executes the addition of a new memo, the second icon 415 may be designed as a '+' icon 416.

The 'add new memo' indication may be displayed along with text explaining the indication below there. The first icon 413 and second icon 415 may be accompanied by a label 417 explaining the indications therein.

FIG. 4C shows diagrams that describe a method of executing a UI according to an embodiment of the present disclosure.

A UI according to various embodiments may be arranged in a form of at least one column or row on the touchscreen of the display of the electronic device. When a click is applied to part of the display or a drag action is applied from the right to the left or from the left to the right on the screen of the display, a UI is executed and displayed as shown in diagram 450. For example, when a drag action is applied to the display from the right to the left, a UI may be displayed in such a way that indications related to at least one application program running on the electronic device are arranged in a column at the right side of the display. The interface with indication arranged in a column is displayed in the same form as the area 405 shown in FIG. 4A.

According to an embodiment, the user may move at least one indication from the area 403 to the area 405 on the UI shown in FIG. 4A. After that, the UI is ended (i.e., not displayed) and the indications, moved to the area 405 in response to a preset gesture or a touch action, are displayed on the area 405 as shown in diagram 450. The user selects one of the indications on the UI as shown in diagram 450 and executes at least one function of a corresponding application program. For example, the user may apply a touch to an indication 455 labeled as 'Create event.' In this case, 'Create event' function, as one of the functions of a calendar application program, may be executed, and a corresponding UI may be displayed, as shown in diagram 460. As described above, according to an embodiment, the user does not need to execute a calendar application program, and search for and execute a 'Create event' function in the executed calendar application program to execute the 'Create event' function.

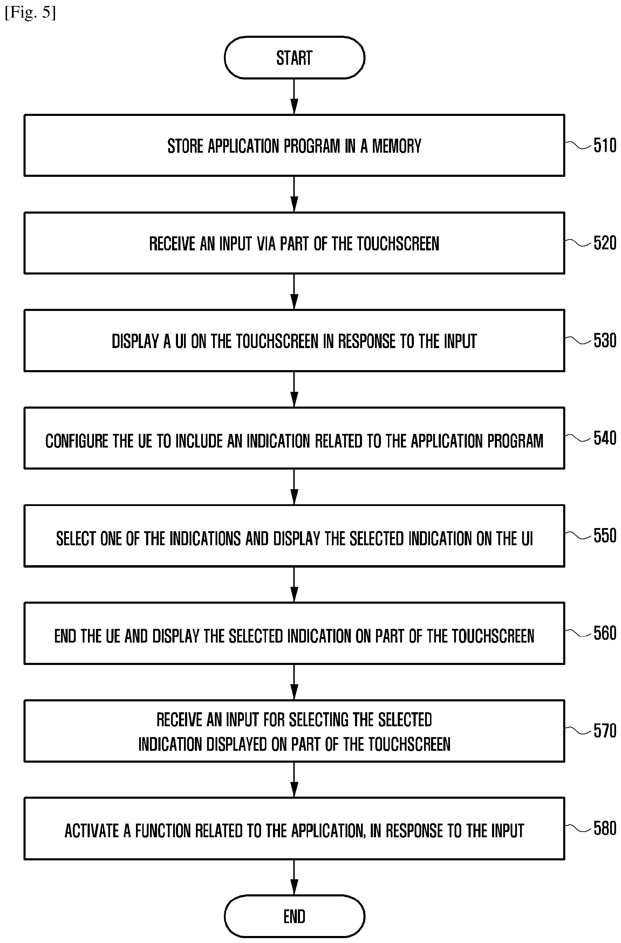

FIG. 5 is a flowchart that describes a method of managing application programs in an electronic device according to an embodiment of the present disclosure.

Referring to FIG. 5, the electronic device according to an embodiment may include a touchscreen display. The touchscreen display includes a first portion facing a first direction and a second portion facing a second direction that differs from the first direction, wherein the second portion extends from one edge of the first portion.

At least one application program including a number of sub-functions and default functionality runs on the electronic device and is stored in a memory of the electronic device in operation 510.

The electronic device determines whether it receives an input for executing at least one application program stored in the memory or a UI in operation 520. The electronic device is capable of receiving the input via first portion and/or second portion of the touchscreen.

When the electronic device receives an input in operation 520, it displays, on the touchscreen, the UI including the first portion displaying a first area (e.g., area 403) and the second portion displaying a second area (e.g., 405), in response to the received input in operation 530.

The first area of the UI further is configured to include a first indication (e.g., 421) representing an application program stored in the memory or a number of second indications (e.g., 423) which respectively represent a number of sub-functions in the application program in operation 540. According to an embodiment, the first indication may refer to icons representing individual application programs. The second indication may be configured to include the first indication, according to types of application program. Alternatively, the second indication may be configured to include part of the first indication, which is modified, or not to include the first indication, according to types of application programs.

The electronic device is capable of receiving a second input for selecting one of the second indications via at least part of the first area of the UI in operation 550. Alternatively, the electronic device is capable of display a third indication (e.g., 455) representing a sub-function selected by the selected second indication on the second area of the user interface.

For example, the selected second indication may be an indication corresponding to a 'send message' function. The 'send message' indication may be moved from the first area to the second area. While the 'send message' indication is moved to the second area, an additional UI may be displayed. According to an embodiment, the additional UI may be an interface for selecting a correspondent from which the user needs to receive a message. When a correspondent from which the user needs to receive a message is selected via the additional user interface, the 'send message' indication may be altered to and displayed as a third indication representing 'send message to a specified person.' Therefore, the third indication may include, in the form of icons, a photograph of a specified person, an image related to a 'send message' function, etc.

When the first to third indications have been edited using the executed user interface, the electronic device ends the first executed UI and displays the third indication in the second portion on the touchscreen display in operation 560.

The electronic device is capable of receiving a third input for selecting the third indication via the second portion of the touchscreen display in operation 570. The electronic device is capable of activating the selected sub-function of the application program, in response to the third input, without activating the default functionality of the application program, in operation 580.

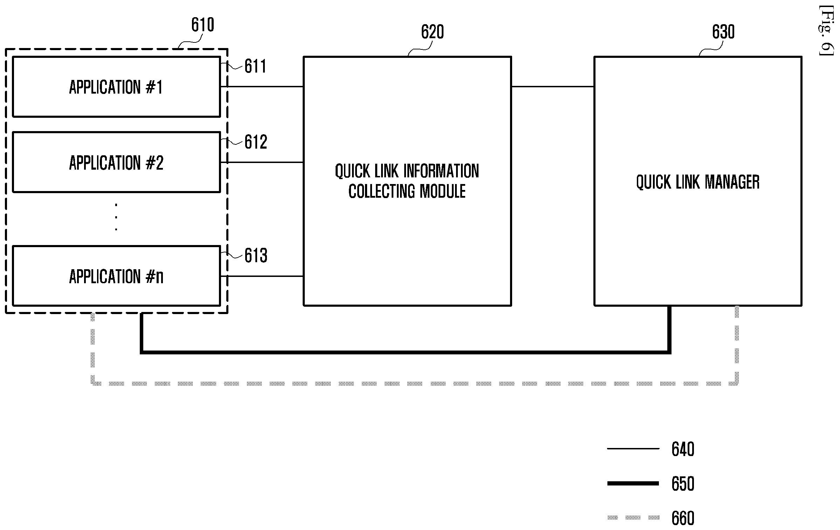

FIG. 6 is a block diagram showing an electronic device for managing application programs according to an embodiment of the present disclosure.

Referring to FIG. 6, the electronic device is capable of including an application group 610, a quick link information collecting module 620 and a quick link manager 630. The application group 610 includes one or more applications 611 to 613 running on the electronic device.

In an embodiment, the application (or application program) group 610 includes one or more of the following applications: home 371, dialer 372, short message service (SMS)/multimedia message service (MMS) 373, instant message (IM) 374, browser 375, camera 376, alarm 377, contact 378, voice dial 379, email 380, calendar 381, media player 382, album 383, clock 384, health care (e.g., an application for measuring the amount of exercise, exercise intensity, blood glucose, etc.), and an environmental information application (e.g., an application for providing atmospheric pressure information, humidity information, temperature information, and the like).

In an embodiment, the applications 611 to 613 may define <intent-filter> declaration interface as follows, in order to register its internal functions, i.e., tasks, and provides it.

```
 <intent-filter> declaration
 add intent-filter for ExecutableInfo ("com.samsung.android.support.executable") in
your Activity, Service or Receiver component
```

The following table 1 is <intent-filter> declaration according to an embodiment. In particular, <action android:name="com.samsung.android.app.test.INTENT_TEST" /> is used to execute Activity 1 function.

### Table 1

**[Table 1]**

| |
|---|
| ```
 For example)
 @AndroidManifest.xml<activity<android:name=".Activity1"...<intent-filter><action
 android:name="com.samsung.android.app.test.INTENT_TEST" /><category
 android:name="android.intent.category.DEFAULT" /></intent-filter>
``` |

In table 1, the action of the <Intent-filter> is required to call a corresponding menu from the external function, and may be defined in a corresponding application program, using a unique value.

In an embodiment, the quick link information collecting module 620 collects information regarding one or more application 611 to 613 running on the electronic device and stores the collected information in the memory of the electronic device. For example, the collected information regarding application programs may contain information related to modes for executing or accessing individual application programs. That is, the quick link information collecting module 620 collects and registers tasks of application programs.

In an embodiment, the quick link manager 630 receives: information for executing the default functionality that the quick link information collecting module 620 collects from application programs; added information such as names of functions and icons, actions for executing detailed functions in a corresponding application program; etc. The quick link manager 630 is capable of configuring a corresponding UI, based on information received from the individual applications 611 to 613 or the quick link information collecting module 620. The quick link manager 630 is capable of classifying formation, received from the individual applications 611 to 613 or the quick link information collecting module 620, into detailed information according to types of application programs. The quick link manager 630 is capable of executing functions of application programs corresponding to information received from the individual applications 611 to 613 or the quick link information collecting module 620, in response to the user input.

In an embodiment, the electronic device may add an area to the information via <meta-data> declaration as follows so that quick link information collecting module 620 can determine information collecting targets.

```
 <meta-data> declaration
 add meta-data for ExecutableInfo("com.samsung.android.support.executable")
```

The following table 2 is a <meta-data> declaration according to an embodiment.

### Table 2

**[Table 2]**

| |
|---|
| ```
 E.g.) @AndroidManifest.xml<meta-data
 android:name="com.samsung.android.support.executable"android:resource="@xml/e
 xecutable" />
``` |

In an embodiment, added information related to a task of published application program may be managed in the form of resource, i.e., executable.xml, as follows.

```
 <resource>
 add file for the executable resource
```

The following table 3 describes added information related to tasks published according to an embodiment, which is managed in the form of resource, i.e., executable.xml. android:icon="@mipmap/ic_launcher" is a first icon 413 showing a task to be published, android: smallIcon="@drawable/app_small_icon" is a second icon (small icon) 413 showing a task to be published. android:label="@string/title1" is a label 417 showing a task to be published, i.e., component type. <extras-attr android:name="type" android:value=["activity" | "service" | "broadcast" | "activityForResult"]/> is an execution method.

### Table 3

**[Table 3]**

| |
|---|
| ```
 For example) @executable.xml<executable
 xmlns:android="http://schemas.android.com/apk/res/android"><command
 android:enabled="true" android:icon=" @mipmap/ic_launcher"
 android:smallIcon="@drawable/app_small_icon" android:label="@string/title1">
 <extras-attr android:name="type" android:value=["activity" \| "service" \| "broadcast" \|
 "activityForResult"]/><extras-attr android:name="category"
 android:value=" string"/><extras-attr android:name=" action" android: value=" action
 string"/><extras-attr android:name="packageName" android:value="package
 name"/><extras-attr android:name="componentName" android: value="component
 name"/><extras-attr android:name="launchMode" android:value=["newTask",
 "singleTop", "clearTop"]/></command>
``` |

In an embodiment, Android application may have three types of components such as Activity, Service, and BroadcastReceiver. Therefore, each task may be selected to comply with a corresponding type of component. Static tasks need to be registered via one of the three types of components. Dynamic tasks need to be registered by declaring a type, ActivityForResult, so that they can additionally cooperate with a quick link manager 630, 740 or 840.

In addition, a first icon 413, second icon (smallIcon) 415 and a label 417 are items required to configure a UI showing corresponding tasks. Category 411 may be used to form a group of similar tasks. For example, when there a specified task of a preload messenger application and a task of a 3rd party IM message, and the messages need to be used for a common category, the tasks are organized into a category of messages, i.e., a message category, to configure a user interface. Action, packageName, componentName, and launchMode may be details used when corresponding tasks are executed by an external application program.

In an embodiment, the following table 4 describes items configuring a UI through which a type of component matching with a corresponding task is selected or tasks are shown.

### Table 4

**[Table 4]**

| Command type | Activity | Service | Broadcast | Activity For Result |
|---|---|---|---|---|
| Enabled | M | M | M | M |
| Label | M | M | M | M |
| First icon | M | M | M | M |
| Second icon (smallIcon) | O | O | O | O |
| Category | O | O | O | O |
| Action | M | M | M | M |
| packageName | M | M | O | M |
| componentName | M | M | O | M |
| launchMode | M | M | M | M |

| | | | | |
|---|---|---|---|---|
| (M: mandatory, O: optional) | | | | |

In an embodiment, when the quick link information collecting module 620 collects or registers tasks of individual application programs or the quick link manager 630 provides a user interface, the processes may be performed by using the static data path 640 and/or the dynamic data paths 650 and 660. The dynamic data paths 650 and 660 may include a path 650 through which the quick link manager 630 requests dynamic data from a specified application program and a path 660 through which the specified application program transmits at least part of the requested dynamic data to the quick link manager 630.

For example, the static data path 640 may be used when a value used for movement, such as a specified menu shortcut of an application program, is not changed. Each of the application programs may contain information for executing the default functionality, added information, such as a name of a function, an icon, an action for executing a detailed function of a corresponding application program, etc. The quick link information collecting module 620 collects and manages the information of the individual application programs.

As shown in FIG. 6, path 640 is referred to as a static data path. That is, the static data path 640 transfers the content related to static data from among the content of application programs, e.g., content described via executable.xml.

The dynamic data paths 650 and 660 may be used when a target value is changed, not a case that a function of moving to a fixed menu, such as a function of calling a specified person or a function of previewing immediately a specified photograph, is performed. For example, in the case of a function of calling a specified person, the quick link manager 630 may receive an action for calling a specified person from an application program which provides a function of calling a specified person, so that it can make a call to the specified person via the action. The application program which provides a function of calling a specified person is capable of creating a UI for selecting a specified person from the contacts, providing the created UI to the user, and receiving information regarding the specified person from the user.

When the user selects a specified person via the UI and makes a call to the person, the application program is capable of creating a new action based on the information related to the specified person and transferring the created action to the quick link manager 630. That is, the application program: receives the information related to the specified person; creates information, such as a call shortcut action for making a call immediately to the specified person, a function name, a caller ID, a small icon, etc.; and transmits the created information to the quick link manager 630.

The transmission of information between the application program, providing a function of making a call to a specified person, and the quick link manager 630 may be performed through the dynamic data paths 650 and 660.

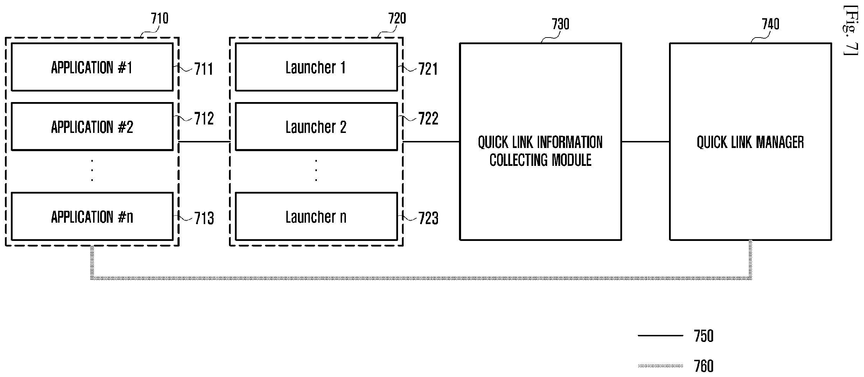

FIG. 7 is a block diagram showing an electronic device for managing application programs according to an embodiment of the present disclosure.

Referring to FIG. 7, one or more applications (or application programs) 711 to 713 included in an application group 710 are capable of registering the shortcuts in the launcher group 720. The launcher group 720 may refer to programs that customize the home screen of an electronic device according to an embodiment. A launcher program of the launcher group 720 enables users to download a corresponding program to the electronic device and to customize the initial screen, the arrangement of icons, etc.

In an embodiment, the quick link manager 740 queries information regarding application shortcuts managed by the launcher group 720, classifies individual functions according to application programs, and executes the classified functions according to a user's input or a user's setting. The query is used in the same sense of inquiry. That is, the query is a request for obtaining content of a file, etc. from a database, based on codes or keys. The query is capable of supporting functions for searching for data from a database based on a user's setup condition and referring to the searched result.

For example, shortcuts for specified functions of a first application program 711 may be registered in a first launcher 721 to an n^{th} launcher 723. The quick link information collecting module 730 is capable of collecting shortcuts for at least one application program registered in at least one launcher in the launcher group 720 and storing the collected shortcuts in the memory of the electronic device. The quick link information collecting module 730 is capable of providing information regarding the collected and stored shortcuts to the quick link manager 740. The quick link information collecting module 730 may be a quick link information collecting module 620 or 830 according to embodiments of the present disclosure. The embodiment may be modified in such a way that another component of the electronic device serves as the quick link information collecting module 730.

In an embodiment, the static data path 750 may be used to transfer data whose value is not changed, such as a specified menu shortcut of an application program. The dynamic data path 760 may be used to transfer data that can be changed according to a user's selection or setting. For example, in the case of a 'call a specified person' function, information regarding specified person, i.e., a value which can be changed according to a user's settings, may be transmitted or received via the dynamic data path 760.

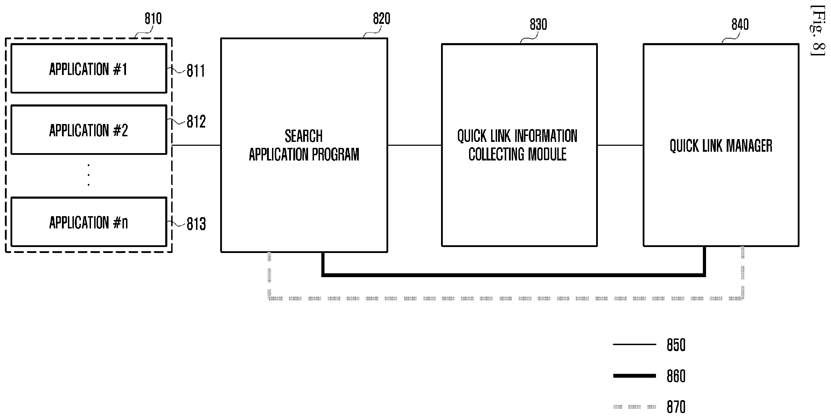

FIG. 8 is a block diagram that described above a method of managing application programs according to an embodiment of the present disclosure.

Referring to FIG. 8, the electronic device searches for one or more application programs 811 to 813 included in the application group 810, via a search application program 820. For example, the electronic device is capable of searching for a specified function or a sub-menu of an application program, such as a phone number accessed via a contacts application program, a specified memo accessed by a memo application program, etc. The search application program 820 is capable of outputting a search result, such as a result value used for the immediate access to a sub-menu or a result value for immediately executing a specified function.

In an embodiment, the quick link manager 840 is capable of providing the user with a shortcut for the access to a specified function or a sub-menu of an application program, using the output result value.

For example, when the search application program 820 declares and registers a search function as its task, the quick link manager 840 is capable of calling the search function of the search application program. The quick link manager 840 is capable of providing the user with the output search function (UI for the search), so that the user can search for another application program. At least one search result (data) may contain shortcut values used for the immediate access to individual search result values. That is, when at least one of the searched results (data) is selected, the quick link manager 840 is capable of receiving a shortcut result value used for the access to the selected result (data) from the search application program.

In an embodiment, the static data path 850 may be used to transfer data whose value is not changed, such as a specified menu shortcut of an application program. The dynamic data paths 860 and 870 may be used to transfer data that can be changed according to a user's selection or settings. The dynamic data path 860 is a path through which the quick link manager 840 requests dynamic data from the search application program 820. The dynamic data path 870 is a path through which the search application program 820 transfers at least part of the dynamic data requested by the quick link manager 840. For example, in the case of a 'call a specified person' function, information regarding specified person, i.e., a value which can be changed according to a user's settings, may be transmitted or received via the dynamic data paths 860 and 870.

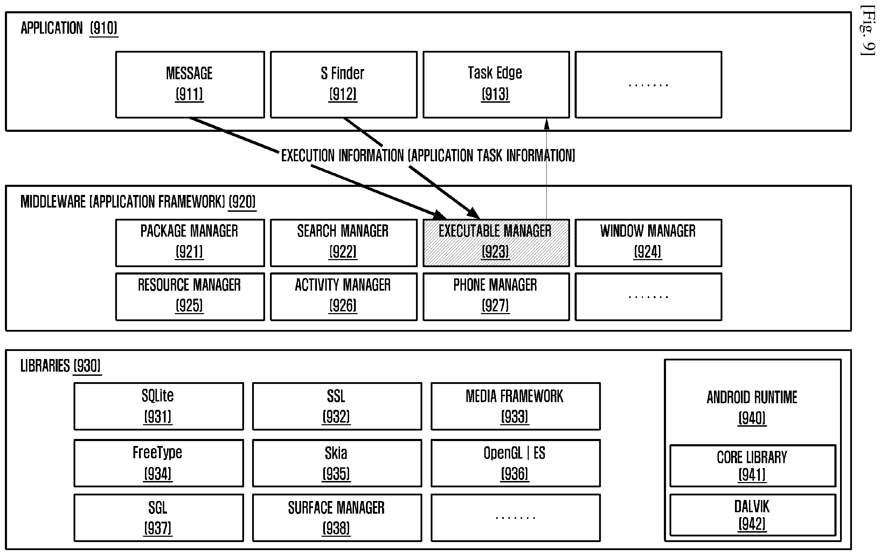

FIG. 9 is a block diagram showing a program module included in an electronic device according to an embodiment of the present disclosure.

Referring to FIG. 9, the electronic device is capable of including one or more applications 910 (e.g., application program 147): for example, a message application program 911 for transmitting/receiving text, such as SMS or MMS, between one electronic device to another electronic device, search application program (e.g., S Finder 912) for performing the search for application programs running on the electronic device and the web search, a UI application program (e.g., Task Edge 913) for providing a quick link for the access to default functionality and sub-detailed functionality of application programs, etc.

Middleware 920 included in the electronic device provides functions commonly required by the application 910. Middleware 920 provides various functions to the application 910 via API 360, so that the application 910 can efficiently manage restricted system resources in the electronic device. In an embodiment, the middleware 920 (e.g., middleware 143) may include at least one of the following: package manager 921, search manager 922, executable manager 923, window manager 924, resource manager 925, activity manager 926, and phone manager 927, etc.

In an embodiment, library 930 of the electronic device may include a library module that a complier uses to add new functions via a programming language during the execution of the application 910. In an embodiment, the library 930 may include at least one of the following: SQLite 931, secure sockets layer (SSL) 932, media framework 933, FreeType 934, Skia 935, OpenGL/ES 936, SGL 937, surface manager 938, and Android runtime library 940.

In an embodiment, the Android runtime library 940 may include a core library 941 and the Dalvik virtual machine 942.

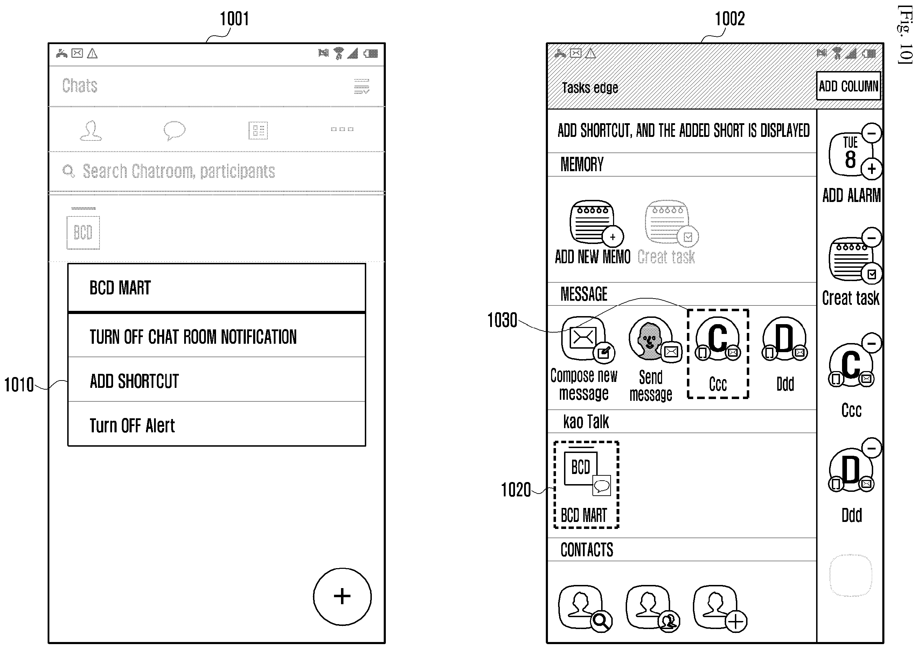

FIG. 10 shows diagrams that describe a method of setting shortcut menus in an electronic device according to an embodiment of the present disclosure.

Referring to FIG. 10., as shown in diagram 1001, the application program running on the electronic device according to an embodiment is capable of proving a shortcut for a specified menu. An example of the application program is a messenger application program for performing the transmission/reception of messages between users via electronic devices. The user of the electronic device may transmit/receive messages to/ from a chat participant 'BCD mart' via the messenger application program. The user of the electronic device may set a shortcut function for a chat room where the user exchanges messages with the chat participant 'BCD mart.' That is, as shown in diagram 1001, the messenger application program may display an interface 1010 in response to a user input.

When the user selects an 'add a shortcut' menu in the interface 1010, the messenger application program is capable of registering a data value for taking a shortcut to the selected menu in the launcher. The quick link information collecting module 620, 730, or 830 of the electronic device is capable of collecting and storing the shortcuts (or data) which are registered in the launcher or stored in each application program. The quick link manager 630, 740, or 840 of the electronic device is capable of receiving the collected/stored shortcut values (or data) from the quick link information collecting module 620, 730, or 830, and providing the received data to the user via the UI provided by the quick link manager 630, 740 or 840, as shown in diagram 1002. The user may create a shortcut icon 1020 for a chat room for exchanging messages with the 'BCD mart' in the UI shown in diagram 1002.

As shown in diagram 1002, the application program running on the electronic device according to an embodiment is capable of proving a user interface. More specifically, as shown in diagram 1002, the UI is provided via the quick link manager 630, 740 or 840 of the electronic device.

The launchers 721 to 723 of an electronic device according to an embodiment may store a specified shortcut value (or data) as a duplicate. For example, a value of a shortcut for making a call to a specified person 'Ccc' 1030 may be duplicately stored in one or more launchers. In this case, the quick link manager 630, 740 or 840 is capable of checking the identity of the shortcut values stored in the launchers 721 to 823, and displaying only one shortcut indication, obtained via a process of selecting one of the duplicately stored shortcut values, on the UI (e.g., a task edge). In the embodiment, the UI may display an indication 1030 to make a call to a first chat participant 'Ccc' and an indication to make a call to a second chart participant 'Ddd,' which are not duplicated. It should be, however, understood that the present disclosure is not limited to the embodiment. For example, the embodiment may be modified in such a way to duplicately display part of the indications, according to the settings, according to categories.

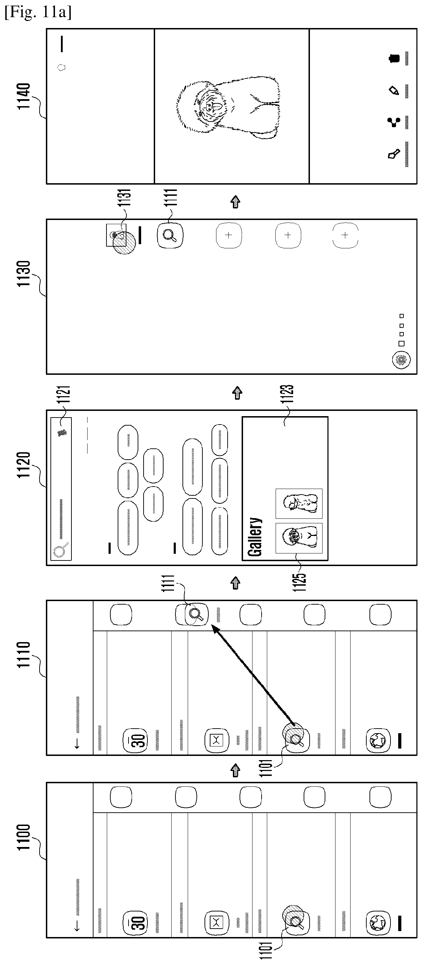

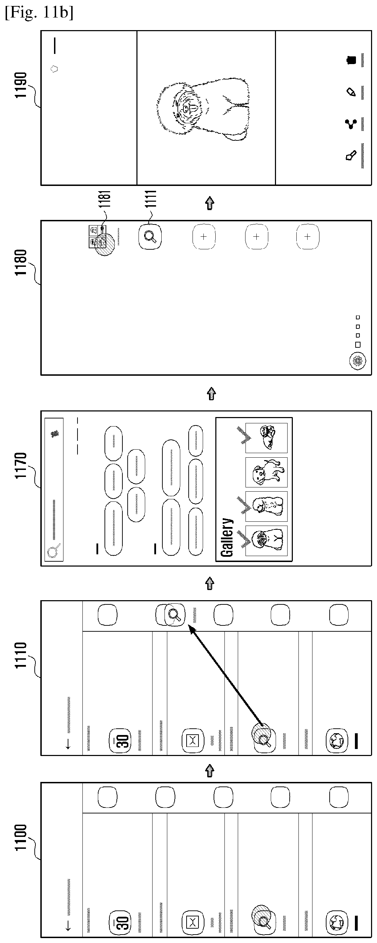

FIGS. 11A and 11B show diagrams that describe a method of managing a search application program in an electronic device according to various embodiments of the present disclosure.

Referring to diagram 1100 of FIG. 11A, the quick link manager 630, 740 or 840 of the electronic device according to an embodiment is capable of providing a UI. The user may select a search indication 1101 related to the search application program from among the indications displayed on the user interface. The selected search indication 1101 may change the state to a movable state. In order to indicate the indication 1101 with a movable state, it may alter at least one icon 413 or 415 included therein or the color or shape of the label 417.

As shown in diagram 1110 of FIG. 11A, the selected search indication 1101 may be moved to a space 111, one of the spaces in the right area of the user interface. For example, in a state where a gesture such as touch is applied to an indication and the indication has changed the state to a movable state, when an input such as a touch is applied to a space to which the indication is moved on the user interface, the indication in a movable state is moved to the touched space. Alternatively, the user touches the indication to be moved without losing the contact and then drags and drops it to a corresponding location.

In an embodiment, the user may touch the search indication moved to and located at the space 1111, thereby calling the search function of the search application program. The search application program may search for web programs, application programs running on the electronic device, data stored in the memory, etc. For example, as shown in diagram 1120, when a search function of the search application program is executed according to a user's operation, the user may enter a keyword or search word 'puppy photograph' to the search field 1121. After searching the electronic device for the keyword, two puppy photographs obtained from the gallery application program, as the search results, are displayed on the search result output space 1123. The user selects one of the search results (data) displayed on the search result output space 1123 and locates the selected result on the UI as shown in diagram 1130.

In order to register at least one search result displayed on the search result output space 1123 in the shortcut indication 1131 located in the UI as shown in diagram 1130 or in order to move at least one search result to the UI for registration, the object may be registered or moved by a touch action, a drag-drop action, etc. For example, when a touch action is applied to a puppy photograph 1125 to be registered as a shortcut, displayed on the search result output space 1123, the puppy photograph 1125 is registered as a shortcut indication 1131. Alternatively, when a puppy photograph 1125 to be registered as a shortcut, displayed on the search result output space 1123, is moved by applying a drag-drop action thereto, it is registered as a shortcut indication 1131 at the moved location.

After that, when the user touches the shortcut indication 1131, the selected puppy photograph 1125 is activated, without executing the gallery application program, as shown in diagram 1140.

In an embodiment, as shown in FIG. 11B, a shortcut indication may be set in such a way that a number of data items are collectively selected and the selected data items are sequentially or simultaneously accessed.

As shown in diagram 1170, the 'puppy photograph' as a search result may be displayed with a number of data items. For example, when a number of puppy photographs are searched, the user may select two or more of the searched photographs. In this case, the quick link manager 630, 740 or 840 of the electronic device may receive shortcut data values for the access to the selected puppy photographs from the quick link information collecting module 620, 730 or 830. The quick link manager 630, 740 or 840 is capable of creating a shortcut indication 1181 for the access to the selected data items displayed on the user interface, based on the shortcut data values, etc., received via the quick link information collecting module 620, 730 or 830, as shown in diagram 1180. When the shortcut indication 1181 is selected, the selected photographs are sequentially or simultaneously displayed according to the settings, as shown in diagram 1190. When the shortcut indication 1181 to be immediately accessed to the selected data items is created, it may be displayed with the number of selected data items. For example, as shown in diagram 1170, when three data items are selected, the shortcut indication 1181 may be configured in such a way that part of the image includes the number icon (not shown), '3.'

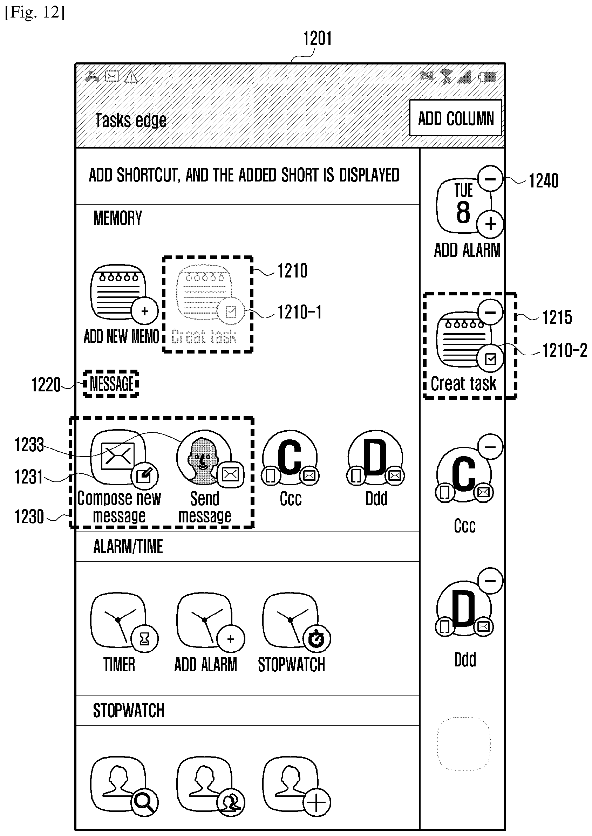

FIG. 12 is a diagram that describes a method of managing application programs according to various embodiments.

Referring to FIG. 12, the quick link information collecting modules 620, 730, and 830 are capable of collecting tasks of an application program. In particular, the quick link information collecting modules 620, 730, and 830 are capable of classifying registered task lists according to application programs, and configuring tasks, using information registered by the application program, to collect and display the detailed functions. For example, the quick link information collecting modules 620, 730, and 830 may collect a shortcut indication via the static data path, from among the indications included in the message category 1220, and the shortcut indication may contain 'compose new message' indication 1231 and 'send message' indication 1233 displayed in the area 1230.

In an embodiment, 'xml' described in the following table 5 refers to a form that is added to a message application program to support the functions of a message category 1220, i.e., 'compose new message' 1231 and 'send message' 1233. The UI may be configured to include first icon 413, second icon (smallIcon) 415, a label 417, etc., which are added to represent corresponding functions. The embodiment is capable of receiving 'message' 1220, as application label, via a package name, and creating a category using the application label, without including <extras-attr android:name="category" android:value="string"/> as an attribute.

### Table 5

**[Table 5]**

| |
|---|
| ```
 <executable
 xmlns:android="http://schemas.android.com/apk/res/android"><commandandroid:ena
 bled="true"android:label="@string/compose_new_message"android:icon="@mipmap
 /ic_launcher_smsmms"android
 mallIcon="@ drawable/small_icon_new_message"><extras-attr android:name="type"
 android:value= "activity" /><extras-attr android:name="action"
 android:value="android.intent.action. SEND" /><extras-attr
 android:name="packageName" android: value="com.android.mms" /><extras-attr
 android:name="componentName" android:value="com.android.mms.
 ui.ComposeMessage" /><extras-attr android:name="launchMode"
 android:value="newTask\|singleTop" /
 ></command><commandandroid:enabled="true"android:label="@string/send_messa
 ge"android:icon="@drawable/contacts_preview_default"android
 mallIcon="@drawable/task_edge_contact_sendmessage"><extras-attr
 android:name="type" android:value="activityForResult"/><extras-attr
 android:name="action" android:value="intent.action.CREATE_
 EDGE_SHORTCUT_SMS"/><extras-attr android:name="packageName"
 android:value="com.android. mms"/><extras-attr android:name="componentName"
 android:value="com.android. mms. ui.TaskEdgeActivity"/><extras-attr
 android:name="launchMode" android:value="singleTop"/></command>
 </executable>
``` |

In an embodiment, as shown in FIG. 12, the indication 1210-1 may be moved to a location 1215. While the edit related to the indication 1210-1 is in process, e.g., in process of moving or deleting the indication, the edit process may be set in such a way that the indication 1210-1 at a location 1210 before moving is dimly displayed, not to be selected by an additional input, thereby preventing the duplicate input from being applied to the same object and same function. The indication 1210-2 at a location 1215 after moving may be displayed normally or deeply. Alternatively, a mark 1240 may be added to the indication to represent a condition as to whether the indication has been moved or can be deleted. When a mark 1240 exists, it indicates a state where indications have not yet been moved or edited in the user interface. In addition, the mark 1240 may be used as a means to check whether an indication with the mark 1240 can be removed.

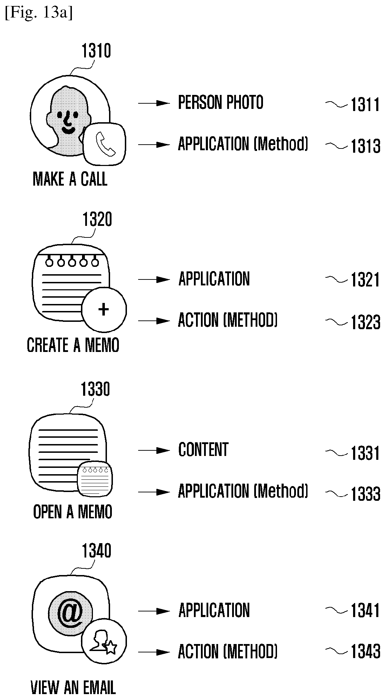

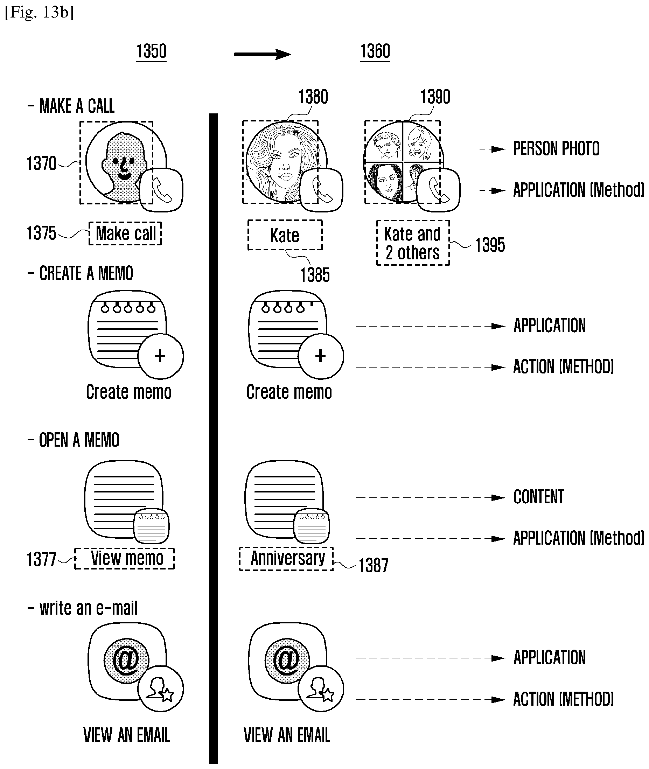

FIGS. 13A and 13B show diagrams that describe a method of managing application programs according to various embodiments of the present disclosure.

Referring to FIG. 13A, tasks registered by the quick link manager 630, 740 or 840 may be configured to include different components depending on types. The following table 6 describes components according to types of tasks.

### Table 6

**[Table 6]**

| Type | Description | Components (attribute) |
|---|---|---|
| Communicate | e.g.) Actions that enable a user to work with a specified person using an electronic device, such as making a call, exchanging messages, etc. | Person photograph + application |
| Newly create | e.g.) Actions for creating specified content, such as creating alarm, creating memo, taking selfie, etc. | application+ action |
| Open | e.g.) Actions, such as opening a path for specified content, opening a memo, opening an image, opening folder, etc. | content + application |
| View | e.g.) Actions, such as viewing a favorite list for searching for a particular item/path, viewing a specified list, etc. | application+ action |

In a method of setting indications for tasks according to an embodiment, a 'communication' type 1310 may include tasks, such as, 'making a call,' 'sending a message,' etc. For example, an indication for a 'calling' function performed by a call application program may include a person photograph 1311 as a first icon 413 and an application icon 1313 of a call application program as a second icon 415. Since a calling task allows a calling party to select a called party, different calling tasks according to selected persons (called parties) may be created, and thus different indications may be created.

In a method of setting indications for tasks according to an embodiment, a 'create' type 1320 may include tasks, such as, 'creating an alarm,' 'creating a memo,' 'taking a selfie,' etc. For example, a 'create a memo' task performed by a memo application program may include an application icon 1321 of a memo application program as a first icon 413 and a create action icon 1323 as a second icon 415. That is, a memo application icon 1321 is applied to the first icon and an action icon 1323 in the form of plus symbol'+' is applied to the second icon, thereby creating an indication for a 'new memo' function which is one of the internal functions of the memo application program.

In a method of setting indications for tasks according to an embodiment, an 'open' type 1330 may include tasks, such as, 'opening a memo,' 'opening an image,' 'opening a folder,' etc. For example, an 'open a memo' task performed by a memo application program may include an icon 1331 related to content to be opened, as a first icon 413, and an application icon 1333 of the memo application program as a second icon 415. That is, an icon 1331 related to content to be opened is applied to the first icon and an application icon 1333 of the memo application program is applied to the second icon 415, thereby creating an indication for an 'open memo' function which is one of the internal functions of the memo application program.

In another embodiment of an open type 1330, the search is performed via a search application program of an electronic device and content displayed as the search result is registered as a shortcut indication. As described above, the search is performed for 'puppy photograph' via a search application program of an electronic device and at least one of the puppy photographs output as the search result is directly registered as a shortcut indication. In this case, the content output as a search result or an image corresponding to the content is displayed as a first icon 413, and an icon of an application program running corresponding content is displayed as a second icon 415, thereby showing the source of the content. In the embodiment, an icon of the gallery application program is displayed as a second icon.

In another embodiment of an open type 1330, shortcut indications for the access to websites via a web browser application program are set. For example, when a shortcut indication for the access to a website, which can be accessed via a web browser application program, is set, a thumbnail image of a corresponding website or a web page image reduced in size from a corresponding website is displayed as a first icon 413, and an icon of an application program running corresponding content is displayed as a second icon 415, thereby showing the source of the content. In the embodiment, an icon of the web browser application program is displayed as a second icon.

In another embodiment of an open type 1330, shortcut indications for the access to content output by a media player application program are set. For example, a shortcut indication for the access to a video, a music file, etc., which can be played back via a media player application program, is set. In this case, an image related to corresponding content is displayed as a first icon 413, and an icon of an application program running corresponding content is displayed as a second icon 415, thereby showing the source of the content. In the embodiment, an icon of the media player application program is displayed as a second icon.

In another embodiment of an open type 1330, shortcut indications for the access to various types of document files which can be written or edited by a document application program are set. For example, a shortcut indication for the access to various types of document files, etc., which can be written or edited by a document application program, is set. In this case, an image related to a corresponding document is displayed as a first icon 413, and an icon of an application program opening a corresponding document is displayed as a second icon 415, thereby showing the source of the content. In the embodiment, an icon of the document application program is displayed as a second icon.

In a method of setting indications for tasks according to an embodiment, a 'view' type 1340 may include tasks, such as 'viewing a favorite list,' 'viewing a specified list,' etc. For example, a 'view an email' task performed by an email application program may include an application icon 1341 of an email application program as a first icon 413 and a favorite action icon 1343 as a second icon 415. That is, an icon of an email application 1341 is applied to a first icon, and a favorite action icon 1343 is applied to a second icon, thereby creating an indication for a function for viewing email set with a favorite, which is one of the internal functions of the memo application program.

With reference to FIG. 13B, indications representing tasks according to types of application program may vary in expression. For example, in the case of a task of making a call to a specified person, as one of the detailed functions of a call application program, the indication of making a call may vary in expression before and after selecting the specified person. That is, before a specified person is selected, the indication 1370 representing a task of making a call to the specified person may include the first icon and the label 1375. The information that the quick link information collecting module collects from the call application program may be expressed, in a form, by indications located in the area 1350 as shown in FIG. 13B. That is, each item may be configured to include a default icon and a label.

In an embodiment, when a user selects a specified person, the items are altered to indications located in the area 1360 as shown in FIG. 13B. For example, when a user selects a specified person 'Kate' for a 'make a call 'task, the first icon 413 is altered to a person photograph 1380 of Kate and the label 417 is altered to Kate's name 1385. When a number of specified people are selected, the first icon 413 may be altered to the photographs 1390 of selected people and the label 417 may be altered to a form 1935 showing the selected people's names.

In another embodiment, when a user selects content to be opened for an 'open memo' task, the first icon 413 may be altered to content or a photograph reduced from the selected content. The label 417 may be altered from a default label 1377, View memo, to a text 1387 representing a title of the selected content, etc. For example, when a user selects memo content related to an anniversary, the label 417 of the altered task indication may be shown as 'Anniversary.'

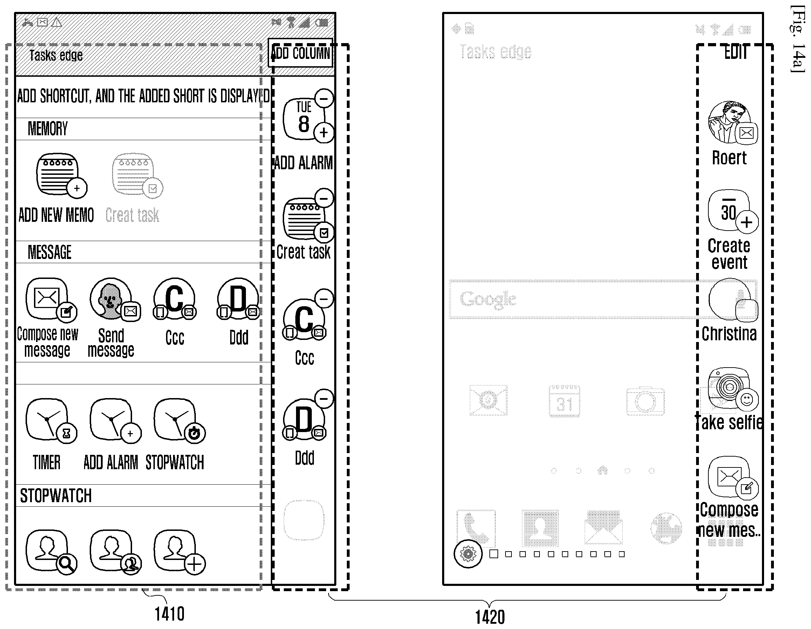

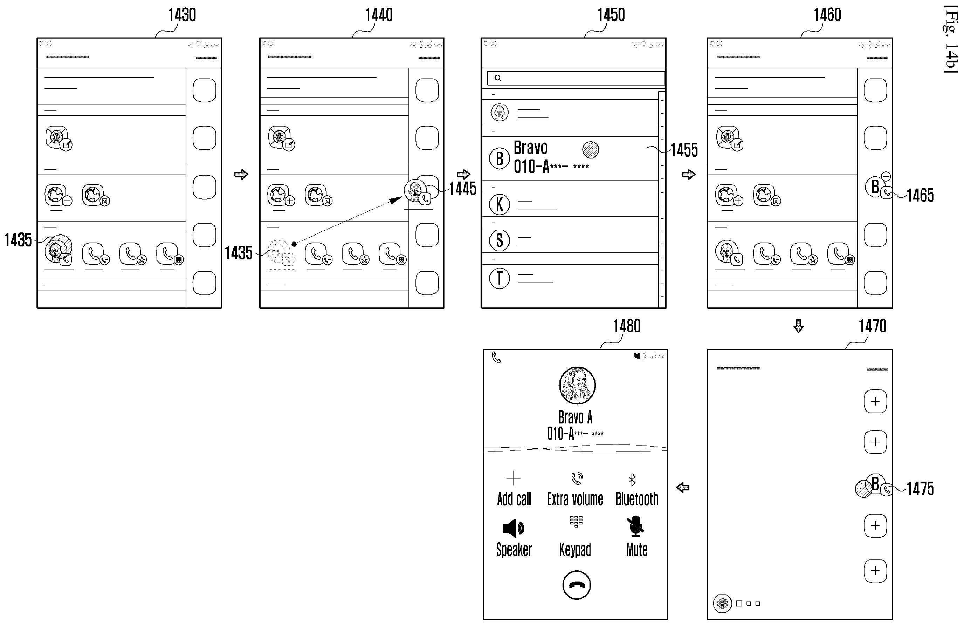

FIGS. 14A and 14B show diagrams that describe a method of managing application programs according to various embodiments of the present disclosure.

Referring to FIG. 14A, a UI of the electronic device according to an embodiment may be divided into two or more areas. The UI may display, in the left area 1410, an indication for executing the default functionality of the application program running on the electronic device, a shortcut indication for executing detailed functions of the application program, etc. The shortcut indication is capable of executing a detailed function of the application program, without performing a number of processes, such as executing the application program, searching for and executing sub-menus, etc.

In an embodiment, when the user applies an input to a portion (e.g., 'add app' button or 'EDIT' button) to determine whether the user edits a UI included in the top end of the user interface, the indications included in the area 1410 or 1420 of the UI may be edited. The indications displayed on the area 1410 may be moved to the area 1420. The indications located in the area 1420 may be edited, e.g., deleted, changed in the order of arrangement, etc.

In an embodiment, the area 1420 of the user interface, shown in the right diagram of FIG. 14A, may include the same indications as the area 1420 of the user interface, shown in the left diagram of FIG. 14A. For example, when the Task edge app is ended in the left diagram and a user's gesture is applied to the electronic device, a translucent UI may be displayed as in the right diagram. When the user selects one of the indications in the area 1420 in the right diagram of FIG. 14A, the selected application program may execute the corresponding function.

FIG. 14B shows diagrams that describe a 'make a call to specified person' function according to an embodiment of the present disclosure.

As shown in diagram 1430, the user may select a default indication 1435 related to a 'make a call to specified person' function. As shown in diagram 1440, the selected indication for the 'make a call to specified person' function is moved. The indication located in the left area 1435 of the UI is moved to the right area 1445 of the user interface. When an indication that needs to receive additional information from the user, such as a ' make a call to specified person' function, is moved, a UI corresponding to individual indications may be provided as shown in diagram 1450. For example, the 'make a call to specified person' function may be provided with a UI for selecting a specified person. When the user selects a specified person, Bravo 1455, the indication may be altered to information related to Bravo as shown in diagram 1460. That is, the indication with a default icon 413 and a label 417 as shown in diagram 1445 may be altered to information related to Bravo as a specified person, as shown in diagram 1465.

When the user selects (or touches) the indication 1475, created in the UI shown in diagrams 1430 to 1460, as shown in diagram 1470, he/she can make a call with Bravo as shown in diagram 1480.

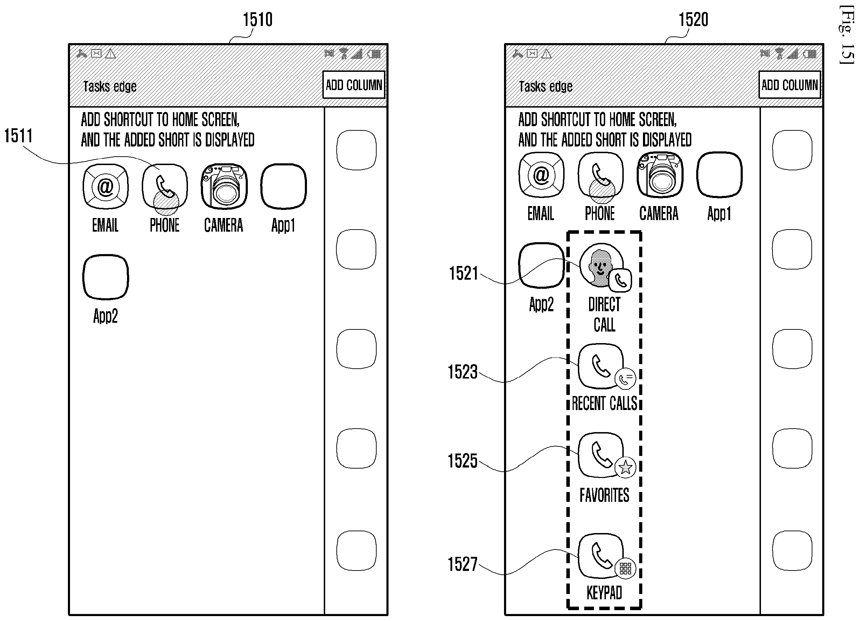

FIG. 15 shows diagrams that describe a method of managing application programs according to an embodiment of the present disclosure.

Referring to FIG. 15, when one of the shortcuts supported according to application programs is selected, the detailed functions of the application program corresponding to the selected shortcut are listed on a UI according to an embodiment.

For example, when the user selects a phone application program 1511 on the screen including default applications as shown in diagram 1510, shortcut functions related to the selected application program 1511 are displayed in animation, in list, below the selected application program, as shown in diagram 1520. It should be understood that the present disclosure is no limited to the form of displaying the shortcuts in the bottom direction. The direction of listing shortcuts may vary depending on the relationship with the nearby application programs. That is, when the shortcut 1511 is selected, detailed functions 1521 to 1527 of the phone application program may be additionally listed.

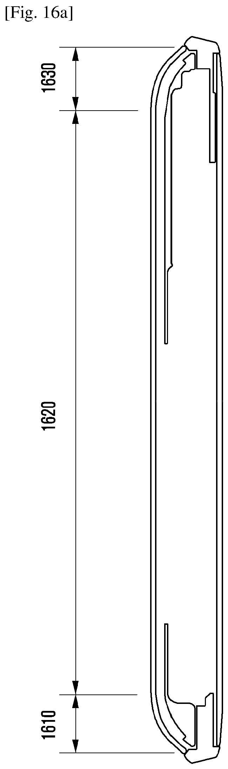

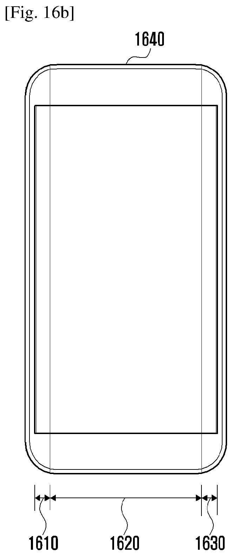

FIGS. 16A and 16B show diagrams that describe the structure of a display of an electronic device according to various embodiments according to the present disclosure.

Referring to FIGS. 16A and 16B, the electronic device according to an embodiment may be implemented in such a way that at least part of the display is bent (curved). The electronic device may provide (display) a UI to the curved part of the display.

As shown in FIG. 16A, the electronic device of the present disclosure may be designed to include a display at least one side of which is curved with a certain curvature, continuously extending from the flat part of the display.

As shown in FIG. 16A, the area 1620 is a flat part of the display. Both sides of the area 1620 have left and right bending parts 1610 and 1630 each of which has a certain curvature. The left and right bending parts 1610 and 16230 extend from the flat part of the area 1620, respectively.

FIG. 16B, illustrates the electronic device from a front side to show the area 1620 and the left and right bending parts 1610 and 1630 in Figures 16A from a different perspective. Although the embodiments are implemented in such a way that the display has left or right curved part and a flat part, it should be understood that the display may be designed in such a way that the left or right curved part and the flat part are formed as a single body, thereby forming a single display.

In another embodiment, the display may be designed to have a left or right curved part and a primary screen part. In another embodiment, the display may also be designed in such a way that the primary screen part is flat and the left and right curved parts are equipped with separate displays.

In various embodiments described in the present disclosure, a method of managing application programs is adapted to an electronic device with a touchscreen display which includes a first portion facing a first direction and a second portion facing a second direction that differs from the first direction, wherein the second portion extends from one edge of the first portion. The method includes: storing at least one application programing including a default functionality and a number of sub-functions; receiving a first input via the first portion and/or second portion of the touchscreen display; displaying a UI on the touchscreen display in response to the first input, wherein the UI is comprised of a first area displayed on the first portion and a second area displayed on the second portion; displaying a first indication representing the application program or a number of second indications representing the sub-functions of the application program on the first area; receiving a second input for selecting one of the second indications via at least part of the first area; displaying, on the second area of the user interface, a third indication representing a sub-function selected in response to the selected second indication; ending the user interface, and displaying the third indication on the second portion of the touchscreen display; receiving a third input for selecting the third indication via the second portion of the touchscreen display; and activating the selected sub-function in response to the third input, without activating the default functionality.

In various embodiments described in the present disclosure, the method includes displaying the first and second areas sequentially or simultaneously.

In the method according to various embodiments described in the present disclosure, each of the first, second, and third indications includes at least one of the following: a text, an icon, an image, a photograph, a thumbnail or a symbol.

In the method according to various embodiments described in the present disclosure, the application program includes at least one of the following: a camera application program, a photograph gallery application program, a photograph application program, a contacts application program, a video conference or chatting application program, a memo application program, a message application program, a web browser application program, and a calendar application program.

In various embodiments described in the present disclosure, a method of managing application programs is adapted to an electronic device with a touchscreen display which includes a first portion facing a first direction and a second portion facing a second direction that differs from the first direction, wherein the second portion extends from one edge of the first portion. The method includes: storing an application program configured to receive a number of content items from the outside of the electronic device or to provide a number of content items stored in a memory of the electronic device; receiving a first input via a first portion and/or a second portion of the touchscreen display; displaying a UI on the touchscreen display in response to the first input, wherein the UI is comprised of a first area displayed on the first portion and a second area displayed on the second portion; displaying a first indication representing the application program or a number of second indications that represent the content items respectively on the first area; receiving a second input for selecting one of the second indications via at least part of the first area; displaying, on the second area of the user interface, a third indication representing a content item selected in response to the selected second indication; ending the user interface, and displaying the third indication on the second portion of the touchscreen display; receiving a third input for selecting the third indication via the second portion of the touchscreen display; and displaying the selected content item on the first portion of the touchscreen display in response to the third input.

In the method according to various embodiments described in the present disclosure, the content includes media content corresponding to at least one of the following: a video, music, and an image.

In the method according to various embodiments described in the present disclosure, the content includes: text content corresponding to at least one of the following: a document, a web browser access address, a search result, a memo, and a message.

In the method according to various embodiments described in the present disclosure, the second indication representing at least one content item is configured to include information corresponding to the media content.

In the method according to various embodiments described in the present disclosure, the second indication representing at least one content item is configured to include information corresponding to the text content.

In various embodiments described in the present disclosure, the method further includes: searching for data included in the electronic device via a search application program; outputting a search result; creating a shortcut indication linked to the output search result; and registering the created shortcut indication as the second indication.

## Claims

1. An electronic device comprising:
a touchscreen display comprising a first portion and a second portion;
at least one processor electrically connected to the touchscreen display; and
a memory electrically connected to the at least one processor,
wherein the memory is configured to store an application program comprising a function and a plurality of sub-functions, and
wherein the memory is further configured to store instructions that, when executed by the at least one processor, cause the at least one processor to:
receive, from the touchscreen display, a first input;
display, on the touchscreen display, a user interface (UI) in response to the first input, the UI comprising:
a first area displayed on the first portion, and
a second area displayed on the second portion, the second area comprising at least one indication corresponding to a sub-function of the application program, wherein the indication comprises a first icon representing the application program and a second icon representing the corresponding sub-function;
receive, from the touchscreen display, a second input selecting an indication from among the at least one indication;
execute the sub-function corresponding to the selected indication in response to the second input without separately executing the application program; and
display, on the touchscreen display a UI corresponding to the executed sub-function.

2. The electronic device of claim 1,
wherein each of the indications comprises at least one of: a text, an icon, an image, a photograph, a thumbnail, or a symbol.

3. The electronic device of any preceding claim, further comprising a housing, wherein the housing comprises
a first surface facing a first direction, and
a second surface facing a second direction that differs from the first direction, the second surface extending from one edge of the first surface and having a width smaller than the first surface, and wherein
the first portion of the touchscreen display is configured to be displayed through the first surface and the second portion of the touchscreen display is configured to be displayed through the second surface.

4. The electronic device of any preceding claim, wherein the first input comprises a drag action from right to left or from left to right on the touchscreen display.

5. The electronic device of claims 3 or 4, wherein the first input is received in the second portion of the touchscreen display.

6. The electronic device of any preceding claim, wherein the first area includes a translucent UI.

7. The electronic device of any preceding claim, wherein the selected indication corresponds to an add memo sub-function of a memo application program.

8. The electronic device of any preceding claim, wherein the second area further comprises an edit indication corresponding to a function for editing the indications of the second area, and wherein the memory is further configured to store instructions that, when executed by the at least one processor, cause the at least one processor to
receive a user input to the edit indication, and
display a user interface in at least one of the first portion and the second portion of the touchscreen for editing the indications displayed in the second area in response to the user input to the edit indication.

9. A method of managing an application program in an electronic device, the method comprising:
storing, in a memory, an application program comprising a function and a plurality of sub-functions;
receiving, by at least one processor from a touchscreen display, a first input;
displaying, on the touchscreen display, a user interface (UI) in response to the first input, the UI comprising:
a first area displayed on a first portion of the touchscreen display, and
a second area displayed on a second portion of the touchscreen display, the second area comprising at least one indication corresponding to a sub-function of the application program, wherein the indication comprises a first icon representing the application program and a second icon representing the corresponding sub-function;
receiving, by the at least one processor from the touchscreen display, a second input selecting an indication from among the at least one indication;
executing the sub-function corresponding to the selected indication in response to the second input without separately executing the application program; and
displaying, on the touchscreen display, a UI corresponding to the executed sub-function.

10. The method of claim 9, further comprising:
wherein each of the indications comprises at least one of a text, an icon, an image, a photograph, a thumbnail, or a symbol.

11. The method of any of claims 9 to 10, wherein the electronic device comprises a housing, wherein the housing comprises
a first surface facing a first direction, and
a second surface facing a second direction that differs from the first direction, the second surface extending from one edge of the first surface and having a width smaller than the first surface, and wherein
the first portion of the touchscreen display is displayed through the first surface and the second portion of the touchscreen display is displayed through the second surface.

12. The method of any of claims 9 to 11, wherein the first input comprises a drag action from right to left or from left to right on the touchscreen display.

13. The method of claims 11 or 12, wherein the first input is received in the second portion of the touchscreen display.

14. The method of any of claims 9 to 13, wherein the first area includes a translucent UI.

15. The method of any of claims 9 to 14, wherein the selected indication corresponds to an add memo sub-function of a memo application program.

16. The method of any of claims 9 to 15, wherein the second area further comprises an edit indication corresponding to a function for editing the indications of the second area, and wherein the method further comprises
receiving a user input to the edit indication, and
displaying a user interface in at least one of the first portion and the second portion of the touchscreen for editing the indications displayed in the second area in response to the user input to the edit indication.

## Patentansprüche

1. Elektronische Vorrichtung, umfassend:
eine Touchscreen-Anzeige, die einen ersten Abschnitt und einen zweiten Abschnitt umfasst;
mindestens ein Prozessor, der elektrisch mit der Touchscreen-Anzeige verbunden ist; und
einen Speicher, der elektrisch mit dem mindestens einen Prozessor verbunden ist,
wobei der Speicher konfiguriert ist, um ein Anwendungsprogramm zu speichern, das eine Funktion und eine Vielzahl von Unterfunktionen umfasst, und
wobei der Speicher ferner konfiguriert ist, um Anweisungen zu speichern, die, wenn sie von dem mindestens einen Prozessor ausgeführt werden, veranlassen, dass der mindestens eine Prozessor:
von der Touchscreen-Anzeige eine erste Eingabe empfängt;
auf der Touchscreen-Anzeige eine Benutzeroberfläche (UI) als Antwort auf die erste Eingabe anzeigt, wobei die UI Folgendes umfasst:
einen ersten Bereich, der auf dem ersten Abschnitt angezeigt wird, und
einen zweiten Bereich, der auf dem zweiten Abschnitt angezeigt wird, wobei der zweite Bereich mindestens eine Angabe umfasst, die einer Unterfunktion des Anwendungsprogramms entspricht, wobei die Angabe ein erstes Icon, das das Anwendungsprogramm darstellt, und ein zweites Icon umfasst, das die entsprechende Unterfunktion darstellt;
von der Touchscreen-Anzeige eine zweite Eingabe empfängt, mit der eine Angabe aus der mindestens einen Angabe ausgewählt wird;
die der ausgewählten Angabe entsprechende Unterfunktion als Antwort auf die zweite Eingabe ausführt, ohne das Anwendungsprogramm separat auszuführen; und
auf der Touchscreen-Anzeige eine UI anzeigt, die der ausgeführten Unterfunktion entspricht.

2. Elektronische Vorrichtung nach Anspruch 1, wobei jede der Angaben mindestens eines der Folgenden umfasst: einen Text, ein Icon, ein Bild, ein Foto, eine Miniaturansicht oder ein Symbol.

3. Elektronische Vorrichtung nach einem der vorhergehenden Ansprüche, ferner umfassend ein Gehäuse, wobei das Gehäuse Folgendes umfasst:
eine erste Oberfläche, die einer ersten Richtung zugewandt ist, und
eine zweite Oberfläche, die einer zweiten Richtung zugewandt ist, die sich von der ersten Richtung unterscheidet, wobei sich die zweite Oberfläche von einer Kante der ersten Oberfläche erstreckt und eine Breite aufweist, die kleiner als die erste Oberfläche ist, und wobei
der erste Abschnitt der Touchscreen-Anzeige so konfiguriert ist, dass er durch die erste Oberfläche angezeigt wird, und der zweite Abschnitt der Touchscreen-Anzeige so konfiguriert ist, dass er durch die zweite Oberfläche angezeigt wird.

4. Elektronische Vorrichtung nach einem der vorhergehenden Ansprüche, wobei die erste Eingabe eine Ziehaktion von rechts nach links oder von links nach rechts auf der Touchscreen-Anzeige umfasst.

5. Elektronische Vorrichtung nach Anspruch 3 oder 4, wobei die erste Eingabe in dem zweiten Abschnitt der Touchscreen-Anzeige empfangen wird.

6. Elektronische Vorrichtung nach einem der vorhergehenden Ansprüche, wobei der erste Bereich eine durchscheinende UI enthält.

7. Elektronische Vorrichtung nach einem der vorhergehenden Ansprüche, wobei die ausgewählte Angabe einer Unterfunktion zum Hinzufügen eines Memos eines Memoanwendungsprogramms entspricht.

8. Elektronische Vorrichtung nach einem der vorhergehenden Ansprüche, wobei der zweite Bereich ferner eine Bearbeitungsangabe umfasst, die einer Funktion zum Bearbeiten der Angaben des zweiten Bereichs entspricht, und wobei der Speicher ferner konfiguriert ist, um Anweisungen zu speichern, die, wenn sie von dem mindestens einen Prozessor ausgeführt werden, veranlassen, dass der mindestens eine Prozessor
eine Benutzereingabe für die Bearbeitungsangabe empfängt, und
eine Benutzeroberfläche in mindestens einem des ersten Abschnitts und des zweiten Abschnitts des Touchscreens anzeigt, um die im zweiten Bereich angezeigten Angaben als Antwort auf die Benutzereingabe für die Bearbeitungsangabe zu bearbeiten.

9. Verfahren zum Verwalten eines Anwendungsprogramms in einer elektronischen Vorrichtung, wobei das Verfahren Folgendes umfasst:
Speichern eines Anwendungsprogramms in einem Speicher, das eine Funktion und eine Vielzahl von Unterfunktionen umfasst;
Empfangen einer ersten Eingabe durch mindestens einen Prozessor von einer Touchscreen-Anzeige;
Anzeigen einer Benutzeroberfläche (UI) auf der Touchscreen-Anzeige als Antwort auf die erste Eingabe, wobei die UI Folgendes umfasst:
einen ersten Bereich, der auf einem ersten Abschnitt der Touchscreen-Anzeige angezeigt wird, und
einen zweiten Bereich, der auf einem zweiten Abschnitt der Touchscreen-Anzeige angezeigt wird, wobei der zweite Bereich mindestens eine Angabe umfasst, die einer Unterfunktion des Anwendungsprogramms entspricht, wobei die Angabe ein erstes Icon, das das Anwendungsprogramm darstellt, und ein zweites Icon umfasst, das die entsprechende Unterfunktion darstellt;
Empfangen einer zweiten Eingabe durch den mindestens einen Prozessor von der Touchscreen-Anzeige, mit der eine Angabe aus der mindestens einen Angabe ausgewählt wird;
Ausführen der der ausgewählten Angabe entsprechenden Unterfunktion als Antwort auf die zweite Eingabe, ohne das Anwendungsprogramm separat auszuführen; und
Anzeigen einer UI auf der Touchscreen-Anzeige, die der ausgeführten Unterfunktion entspricht.

10. Verfahren nach Anspruch 9, ferner umfassend:
wobei jede der Angaben mindestens eines von einem Text, einem Icon, einem Bild, einem Foto, einer Miniaturansicht oder einem Symbol umfasst.

11. Verfahren nach einem der Ansprüche 9 bis 10, wobei die elektronische Vorrichtung ein Gehäuse umfasst, wobei das Gehäuse Folgendes umfasst:
eine erste Oberfläche, die einer ersten Richtung zugewandt ist, und
eine zweite Oberfläche umfasst, die einer zweiten Richtung zugewandt ist, die sich von der ersten Richtung unterscheidet, wobei sich die zweite Oberfläche von einer Kante der ersten Oberfläche erstreckt und eine Breite aufweist, die kleiner als die erste Oberfläche ist, und wobei
der erste Abschnitt der Touchscreen-Anzeige durch die erste Oberfläche angezeigt wird, und der zweite Abschnitt der Touchscreen-Anzeige durch die zweite Oberfläche angezeigt wird.

12. Verfahren nach einem der Ansprüche 9 bis 11, wobei die erste Eingabe eine Ziehaktion von rechts nach links oder von links nach rechts auf der Touchscreen-Anzeige umfasst.

13. Verfahren nach Anspruch 11 oder 12, wobei die erste Eingabe in dem zweiten Abschnitt der Touchscreen-Anzeige empfangen wird.

14. Verfahren nach einem der Ansprüche 9 bis 13, wobei der erste Bereich eine durchscheinende UI enthält.

15. Verfahren nach einem der Ansprüche 9 bis 14, wobei die ausgewählte Angabe einer Unterfunktion zum Hinzufügen eines Memos eines Memoanwendungsprogramms entspricht.

16. Verfahren nach einem der Ansprüche 9 bis 15, wobei der zweite Bereich ferner eine Bearbeitungsangabe umfasst, die einer Funktion zum Bearbeiten der Angaben des zweiten Bereichs entspricht, und wobei das Verfahren ferner Folgendes umfasst:
Empfangen einer Benutzereingabe für die Bearbeitungsangabe und
Anzeigen einer Benutzeroberfläche in mindestens einem des ersten Abschnitts und des zweiten Abschnitts des Touchscreens, um die im zweiten Bereich angezeigten Angaben als Antwort auf die Benutzereingabe für die Bearbeitungsangabe zu bearbeiten.

## Revendications

1. Dispositif électronique comprenant :
un affichage d'écran tactile comprenant une première partie et une seconde partie ;
au moins un processeur connecté électriquement à l'affichage d'écran tactile ; et
une mémoire connectée électriquement à l'au moins un processeur,
dans lequel la mémoire est configurée pour stocker un programme d'application comprenant une fonction et une pluralité de sous-fonctions, et
dans lequel la mémoire est en outre configurée pour stocker des instructions qui, lorsqu'elles sont exécutées par l'au moins un processeur, amènent l'au moins un processeur à :
recevoir, en provenance de l'affichage d'écran tactile, une première entrée ;
afficher, sur l'affichage d'écran tactile, une interface utilisateur (UI) en réponse à la première entrée, l'UI comprenant :
une première zone affichée sur la première partie, et
une seconde zone affichée sur la seconde partie, la seconde zone comprenant au moins une indication correspondant à une sous-fonction du programme d'application, dans lequel l'indication comprend une première icône représentant le programme d'application et une deuxième icône représentant la sous-fonction correspondante ;
recevoir, en provenance de l'affichage d'écran tactile, une seconde entrée sélectionnant une indication parmi l'au moins une indication ;
exécuter la sous-fonction correspondant à l'indication sélectionnée en réponse à la deuxième entrée sans exécuter séparément le programme d'application ; et
afficher, sur l'affichage d'écran tactile une UI correspondant à la sous-fonction exécutée.

2. Dispositif électronique selon la revendication 1, dans lequel chacune des indications comprend au moins l'un parmi : un texte, une icône, une image, une photographie, une vignette ou un symbole.

3. Dispositif électronique selon l'une quelconque des revendications précédentes, comprenant en outre un boîtier, dans lequel le boîtier comprend
une première surface orientée dans une première direction, et
une seconde surface orientée dans une seconde direction qui diffère de la première direction, la seconde surface s'étendant à partir d'un bord de la première surface et ayant une largeur inférieure à la première surface, et dans lequel
la première partie de l'affichage d'écran tactile est configurée pour être affichée à travers la première surface et la seconde partie de l'affichage d'écran tactile est configurée pour être affichée à travers la seconde surface.

4. Dispositif électronique selon l'une quelconque des revendications précédentes, dans lequel la première entrée comprend une action de glissement de droite à gauche ou de gauche à droite sur l'affichage d'écran tactile.

5. Dispositif électronique selon la revendication 3 ou 4, dans lequel la première entrée est reçue dans la seconde partie de l'écran tactile.

6. Dispositif électronique selon l'une quelconque des revendications précédentes, dans lequel la première zone comprend une UI translucide.

7. Dispositif électronique selon l'une quelconque des revendications précédentes, dans lequel l'indication sélectionnée correspond à une sous-fonction d'ajout de mémo d'un programme d'application de mémo.

8. Dispositif électronique selon l'une quelconque des revendications précédentes, dans lequel la seconde zone comprend en outre une indication d'édition correspondant à une fonction d'édition des indications de la seconde zone, et dans lequel la mémoire est en outre configurée pour stocker des instructions qui, lorsqu'elles sont exécutées par l'au moins un processeur, amènent l'au moins un processeur
à recevoir une entrée d'utilisateur à l'indication d'édition, et
à afficher une interface utilisateur dans au moins l'une de la première partie et de la seconde partie de l'écran tactile pour éditer les indications affichées dans la seconde zone en réponse à l'entrée d'utilisateur à l'indication d'édition.

9. Procédé de gestion d'un programme d'application dans un dispositif électronique, le procédé comprenant :
le stockage, dans une mémoire, d'un programme d'application comprenant une fonction et une pluralité de sous-fonctions ;
la réception, par au moins un processeur en provenance d'un affichage d'écran tactile, d'une première entrée ;
l'affichage, sur l'affichage d'écran tactile, d'une interface utilisateur (UI) en réponse à la première entrée, l'UI comprenant :
une première zone affichée sur une première partie de l'affichage d'écran tactile, et
une seconde zone affichée sur une seconde partie de l'affichage d'écran tactile, la seconde zone comprenant au moins une indication correspondant à une sous-fonction du programme d'application, dans lequel l'indication comprend une première icône représentant le programme d'application et une deuxième icône représentant la sous-fonction correspondante ;
la réception, par l'au moins un processeur en provenance de l'affichage d'écran tactile, d'une seconde entrée sélectionnant une indication parmi l'au moins une indication ;
l'exécution de la sous-fonction correspondant à l'indication sélectionnée en réponse à la seconde entrée sans exécuter séparément le programme d'application ; et
l'affichage, sur l'affichage d'écran tactile, d'une UI correspondant à la sous-fonction exécutée.

10. Procédé selon la revendication 9, comprenant en outre :
dans lequel chacune des indications comprend au moins l'un parmi un texte, une icône, une image, une photographie, une vignette ou un symbole.

11. Procédé selon l'une quelconque des revendications 9 à 10, dans lequel le dispositif électronique comprend un boîtier, dans lequel le boîtier comprend une première surface orientée dans une première direction, et
une seconde surface orientée dans une seconde direction qui diffère de la première direction, la seconde surface s'étendant depuis un bord de la première surface et ayant une largeur inférieure à la première surface, et dans lequel
la première partie de l'affichage d'écran tactile est affichée à travers la première surface et la seconde partie de l'affichage d'écran tactile est affichée à travers la seconde surface.

12. Procédé selon l'une quelconque des revendications 9 à 11, dans lequel la première entrée comprend une action de glissement de droite à gauche ou de gauche à droite sur l'affichage d'écran tactile.

13. Procédé selon les revendications 11 ou 12, dans lequel la première entrée est reçue dans la seconde partie de l'affichage d'écran tactile.

14. Procédé selon l'une quelconque des revendications 9 à 13, dans lequel la première zone comprend une UI translucide.

15. Procédé selon l'une quelconque des revendications 9 à 14, dans lequel l'indication sélectionnée correspond à une sous-fonction d'ajout de mémo d'un programme d'application de mémo.

16. Procédé selon l'une quelconque des revendications 9 à 15, dans lequel la seconde zone comprend en outre une indication d'édition correspondant à une fonction d'édition des indications de la seconde zone, et dans lequel le procédé comprend en outre
la réception d'une entrée d'utilisateur à l'indication d'édition, et
l'affichage d'une interface utilisateur dans au moins l'une de la première partie et de la seconde partie de l'écran tactile pour éditer les indications affichées dans la seconde zone en réponse à l'entrée d'utilisateur à l'indication d'édition.
